(19) Europäisches Patentamt
European Patent Office
Office européen des brevets

(11) **EP 4 166 988 A1**

(12) **EUROPEAN PATENT APPLICATION**
published in accordance with Art. 153(4) EPC

(43) Date of publication:
**19.04.2023 Bulletin 2023/16**

(51) International Patent Classification (IPC):
*G01S 17/89* $^{(2020.01)}$

(21) Application number: **20942163.5**

(52) Cooperative Patent Classification (CPC):
**G01S 17/89**

(22) Date of filing: **22.06.2020**

(86) International application number:
**PCT/CN2020/097435**

(87) International publication number:
**WO 2021/258246 (30.12.2021 Gazette 2021/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang District,
Shenzhen,
Guangdong 518129 (CN)**

(72) Inventor: **CHENG, Zao
Shenzhen, Guangdong 518129 (CN)**

(74) Representative: **Huawei European IPR
Huawei Technologies Duesseldorf GmbH
Riesstraße 25
80992 München (DE)**

(54) **RADAR SYSTEM, MOBILE DEVICE AND RADAR DETECTION METHOD**

(57)    A radar system (600), a movable device (100), and a radar detection method are disclosed. A laser module (610) in the radar system (600) generates a multi-wavelength optical signal. A two-dimensional scanner (620) performs two-dimensional scanning by using the multi-wavelength optical signal, and receives an echo signal located in a receiver field of view of the two-dimensional scanner (620). A wavelength division module (630) performs optical splitting processing on the echo signal. Then, a detection module (640) converts a plurality of single-wavelength optical signals into a plurality of electrical signals. A processor (650) obtains first point cloud data based on the electrical signals. One unit of a receiver field of view of the two-dimensional scanner (620) includes a plurality of echo signals, which breaks through a limitation of time of flight on a quantity of point clouds corresponding to a single-wavelength optical signal, also breaks through a limitation of the single-wavelength optical signal on environment adaptability, and increases a quantity of point clouds detected by a radar. This also increases valid information carried in point cloud data, helps improve detection performance of the laser radar, and helps reduce a security risk in an autonomous driving process caused thereby.

FIG. 6

EP 4 166 988 A1

**Description**

**TECHNICAL FIELD**

This application relates to the radar field, and in particular, to a radar system, a movable device, and a radar detection method.

**BACKGROUND**

With continuous development of autonomous driving technologies, requirements on sensors in an autonomous driving system are increasingly high. A laser radar is one of important sensors in the autonomous driving system, and requirements on resolution, a quantity of point clouds, a detection distance, and the like of the laser radar are increasingly high.

Currently, a single-wavelength laser radar is usually used to detect a target in the conventional technology. That is, the laser radar transmits a single-wavelength laser signal to the outside, receives an echo signal of the single-wavelength laser signal, and analyzes and processes the single-wavelength laser signal and the echo signal of the single-wavelength laser signal, to obtain point cloud data of the target, and further determine a distance between the target and the laser radar and a type of the target.

However, the single-wavelength laser signal is limited by a detection distance, time of flight (Time Of Flight, TOF), environment adaptability, or the like. A unit of a receiver field of view corresponding to the single-wavelength laser radar can include only one echo signal, which results in a small quantity of point clouds from the single-wavelength laser radar, and further results in small valid information carried in the point clouds. This also greatly affects detection performance of the laser radar. Therefore, how to improve the detection performance of the laser radar to reduce a security risk in an autonomous driving process becomes an urgent technical problem to be resolved in this field.

**SUMMARY**

Embodiments of this application provide a radar system, a movable device, and a radar detection method, to improve detection performance of a laser radar, and reduce a security risk in an autonomous driving process caused thereby.

According to a first aspect, an embodiment of this application provides a radar system. In the radar system, a laser module is configured to generate a multi-wavelength optical signal; a two-dimensional scanner is configured to: perform two-dimensional scanning by using the multi-wavelength optical signal, and receive an echo signal located in a receiver field of view of the two-dimensional scanner, where the echo signal is a reflected signal formed after a scanned object is irradiated by the multi-wavelength optical signal; a wavelength division module is configured to perform optical splitting processing on an echo signal group to obtain a plurality of single-wavelength optical signals; and a detection module converts the plurality of single-wavelength optical signals into electrical signals corresponding to wavelengths, and further obtains first point cloud data based on the electrical signals corresponding to the wavelengths. In addition, in the radar system provided in this application, a unit of a receiver field of view of the two-dimensional scanner includes a plurality of echo signals. Compared with the conventional technology in which a unit of a receiver field of view of a single-wavelength laser radar can include only one echo signal, this application can break through a limitation of TOF time on a quantity of point clouds corresponding to a single-wavelength optical signal, also break through a limitation of the single-wavelength optical signal on environment adaptability, and effectively increase a quantity of point clouds in the unit of the receiver field of view. This also increases valid information carried in point cloud data because of increase of the quantity of point clouds, and helps improve detection performance of a laser radar. Therefore, the radar system provided in this application can effectively improve the detection performance of the laser radar, and help reduce a security risk in an autonomous driving process caused thereby.

In a possible embodiment, the multi-wavelength optical signal includes a first wavelength optical signal and a second wavelength optical signal, and a wavelength of the first wavelength optical signal is different from a wavelength of the second wavelength optical signal. In this case, when a transmit parameter of the first wavelength optical signal is different from a transmit parameter of the second wavelength optical signal, a parameter of a minimum receiver field of view corresponding to the first wavelength optical signal is different from a parameter of a minimum receiver field of view corresponding to the second wavelength optical signal. The parameter of the minimum receiver field of view includes one or more of a location, a size, or a quantity of the minimum receiver field of view. The transmit parameter includes one or more of a divergence angle, an emergent location, an emergent moment, an emergent angle, a location of a receiver field of view, a size of a receiver field of view, or time of flight.

In another possible embodiment, the laser module includes one or more lasers; and when the laser module includes one laser, the laser is a tunable laser, and in this case, the multi-wavelength optical signal includes a plurality of single-wavelength optical signals; or when the laser module includes a plurality of lasers, the plurality of lasers includes tunable lasers and/or single-wavelength lasers, where wavelengths of optical signals generated by any two of the single-wavelength lasers are different, and in this case, the multi-wavelength optical signal includes one multi-wavelength optical signal, or a plurality of single-wavelength optical signals.

In another possible embodiment, the wavelength division module is specifically configured to: perform optical splitting processing on the echo signal to obtain the plurality of single-wavelength optical signals, where any two of the single-wavelength optical signals have different wavelengths.

In another possible embodiment, the wavelength division module is further configured to: perform optical splitting processing or light converging processing on the multi-wavelength optical signal generated by the laser module, and provide the multi-wavelength optical signal to the two-dimensional scanner for two-dimensional scanning.

In another possible embodiment, the wavelength division module includes one or more of a beam splitter, an optical fiber, a lens, a prism, a reflector, or a diffraction component.

In another possible embodiment, the detection module includes one or more detectors. When the detection module includes one detector, the detector is a multi-wavelength detector, and the multi-wavelength detector is configured to receive and process the single-wavelength optical signals with a plurality of wavelengths; or when the detection module includes a plurality of detectors, the plurality of detectors include multi-wavelength detectors and/or single-wavelength detectors, where any one of the single-wavelength detectors is configured to receive and process the single-wavelength optical signal with one wavelength.

In another possible embodiment, the radar system is an off-axis optical system or a coaxial optical system.

In another possible embodiment, the processor is specifically configured to: directly generate the first point cloud data based on the electrical signals respectively corresponding to the plurality of wavelengths.

In another possible embodiment, the processor is specifically configured to: generate second point cloud data based on the electrical signals respectively corresponding to the plurality of wavelengths; and compensate the second point cloud data by using an environmental quality parameter, to obtain the first point cloud data.

In another possible embodiment, the processor is further configured to: extract, from the electrical signals respectively corresponding to the plurality of wavelengths, noise parameters corresponding to the wavelengths; and determine the environmental quality parameter based on the noise parameters corresponding to the plurality of wavelengths.

In another possible embodiment, the noise parameter includes a backscattering noise parameter. In this case, the processor is specifically configured to: process, by using a backscattering function, backscattering noise parameters corresponding to the plurality of wavelengths, to obtain scattering coefficients; process, by using an atmospheric absorption function, the electrical signals and the backscattering noise parameters corresponding to the plurality of wavelengths, to obtain absorption coefficients; and determine the environmental quality parameter based on the scattering coefficients and the absorption coefficients.

In another possible embodiment, the environmental quality parameter includes one or more of a fog cluster type, a bad weather level, a particle concentration, humidity, or a particle size distribution.

In another possible embodiment, the processor is specifically configured to: obtain, from a preset compensation formula, a target compensation formula that matches the environmental quality parameter; and compensate the second point cloud data by using the target compensation formula, to obtain the first point cloud data.

In another possible embodiment, the processor is further configured to: obtain, based on the first point cloud data, a single-wavelength detection result corresponding to each wavelength; and determine a radar detection result based on single-wavelength detection results corresponding to the plurality of wavelengths.

In another possible embodiment, the processor is specifically configured to: determine, by using a receive/transmit moment of an optical signal corresponding to each wavelength in the first point cloud data, a first distance corresponding to each wavelength as the single-wavelength detection result; and determine a second distance based on first distances corresponding to the plurality of wavelengths, where the second distance is used to represent a distance between the radar system and a detection target.

In another possible embodiment, the processor is specifically configured to: determine, by using echo intensity of an optical signal corresponding to each wavelength in the first point cloud data, a target reflectivity corresponding to each wavelength as the single-wavelength detection result; and determine a type of the detection target based on target reflectivities corresponding to the plurality of wavelengths.

In another possible embodiment, the processor is further configured to: determine a detection parameter of the radar system, where the detection parameter includes a transmit parameter of the multi-wavelength optical signal with the plurality of wavelengths and a configuration parameter of the radar system; and detect the target based on the detection parameter.

In another possible embodiment, the processor is further configured to: receive first information, where the first information is used to indicate the transmit parameter and/or the configuration parameter of the radar system.

According to a second aspect, an embodiment of this application provides a movable device including the radar system according to any embodiment of the first aspect and a controller. The controller is coupled to the radar system, and may be configured to control the movable device based on first point cloud data.

According to a third aspect, an embodiment of this application provides a movable device including the radar system according to any embodiment of the first aspect and a controller. The controller is coupled to the radar system, and may be configured to control the movable device based on first point cloud data. In addition, when the radar system directly outputs the first point cloud data, the controller may be configured to: obtain, based on the first point cloud data, a single-wavelength detection result corresponding to each wavelength, and determine a radar detection result based on the single-wavelength detection results corresponding to a plurality of wavelengths.

In the movable device of the second aspect or the third aspect, the radar system can emit a multi-wavelength optical signal, and obtain the first point cloud data based on an echo signal of the multi-wavelength optical signal. A unit of a receiver field of view of a two-dimensional scanner includes a plurality of echo signals. Compared with the conventional technology in which a unit of a receiver field of view of a single-wavelength laser radar can include only one echo signal, this application can break through a limitation of TOF time on a quantity of point clouds corresponding to a single-wavelength optical signal, also break through a limitation of the single-wavelength optical signal on environment adaptability, effectively increase a quantity of point clouds in the unit of the receiver field of view. This also increases valid information carried in point cloud data because of increase of the quantity of point clouds, and helps improve detection performance of a laser radar. In conclusion, the radar system provided in this application can effectively improve the detection performance of the laser radar, and help reduce a security risk in an autonomous driving process caused thereby.

In a possible embodiment of the second aspect or the third aspect, the controller is specifically configured to: send a first message to the radar system, where the first message is used to indicate a transmit parameter and/or a configuration parameter of the radar system.

In another possible embodiment of the second aspect or the third aspect, the movable device further includes a sensor and/or a communications module, where the controller is further configured to: obtain an environmental parameter by using the sensor and/or the communications module; and determine the transmit parameter of the laser signal of each wavelength and/or the configuration parameter based on the environmental parameter.

In another possible embodiment of the second aspect or the third aspect, the sensor includes one or more of a millimeter-wave radar, an image collection apparatus, a global positioning system receiver, an inertial measurement unit, and a human-computer interaction interface.

In another possible embodiment of the second aspect or the third aspect, the controller is further configured to: receive second information from the radar system, where the second information carries the first point cloud data; obtain, based on the first point cloud data, a single-wavelength detection result corresponding to each wavelength; and determine the radar detection result based on single-wavelength detection results corresponding to the plurality of wavelengths.

In another possible embodiment of the second aspect or the third aspect, the controller is specifically configured to: determine, by using a receive/transmit moment of an optical signal corresponding to each wavelength in the first point cloud data, a first distance corresponding to each wavelength as the single-wavelength detection result; and determine a second distance based on first distances corresponding to the plurality of wavelengths, where the second distance is used to represent a distance between the radar system and a detection target.

In another possible embodiment of the second aspect or the third aspect, the controller is specifically configured to: determine, by using echo intensity of an optical signal corresponding to each wavelength in the first point cloud data, a target reflectivity corresponding to each wavelength as the single-wavelength detection result; and determine a type of the detection target based on target reflectivities corresponding to the plurality of wavelengths.

In another possible embodiment of the second aspect or the third aspect, the movable device includes a vehicle, an unmanned aerial vehicle, or a ground robot.

According to a fourth aspect, an embodiment of this application provides a radar detection method, and the method may be applied to the radar system in any embodiment of the first aspect, the second aspect, or the third aspect. In the radar detection method, the radar system may generate a multi-wavelength optical signal, perform two-dimensional scanning by using the multi-wavelength optical signal, and receive an echo signal located in a receiver field of view of a two-dimensional scanner. In this way, optical splitting processing is performed on the echo signal and an optical signal is converted into an electrical signal, to obtain electrical signals corresponding to wavelengths, and further obtain first point cloud data based on the electrical signals corresponding to the wavelengths. In this method, a unit of the receiver field of view of the two-dimensional scanner includes a plurality of echo signals. Compared with the conventional technology in which a unit of a receiver field of view of a single-wavelength laser radar can include only one echo signal, this application can break through a limitation of TOF time on a quantity of point clouds corresponding to a single-wavelength optical signal, also break through a limitation of the single-wavelength optical signal on environment adaptability, effectively increase a quantity of point clouds in the unit of the receiver field of view, and also obtain more valid information based on the point clouds. This helps improve detection performance of a laser radar. In conclusion, the radar system provided in this application can effectively improve the detection performance of the laser radar, and help reduce a security risk in an autonomous driving process caused thereby.

In a possible embodiment, the obtaining first point cloud data based on the electrical signals corresponding to the wavelengths includes: generating second point cloud data based on the electrical signals respectively corresponding to the plurality of wavelengths; and compensating the second point cloud data by using an environmental quality parameter, to obtain the first point cloud data.

In another possible embodiment, the method further includes: extracting, from the electrical signals respectively corresponding to the plurality of wavelengths, noise parameters corresponding to the wavelengths; and determining the environmental quality parameter based on the noise parameters corresponding to the plurality of wavelengths.

In another possible embodiment, the noise parameter includes a backscattering noise parameter; and the extracting, from the electrical signals respectively corresponding to the plurality of wavelengths, noise parameters corresponding to the wavelengths includes: processing, by using a backscattering function, backscattering noise parameters corresponding to the plurality of wavelengths to obtain scattering coefficients; processing, by using an atmospheric absorption function, the electrical signals and the backscattering noise parameters corresponding to the plurality of wavelengths, to obtain absorption coefficients; and determining the environmental quality parameter based on the scattering coefficients and the absorption coefficients.

In another possible embodiment, the compensating the second point cloud data by using an environmental quality parameter, to obtain the first point cloud data includes: obtaining, from a preset compensation formula, a target compensation formula that matches the environmental quality parameter; and compensating the second point cloud data by using the target compensation formula, to obtain the first point cloud data.

In another possible embodiment, the method further includes: obtaining, based on the first point cloud data, a single-wavelength detection result corresponding to each wavelength; and determining a radar detection result based on single-wavelength detection results corresponding to the plurality of wavelengths.

In another possible embodiment, the obtaining, based on the first point cloud data, a single-wavelength detection result corresponding to each wavelength includes: determining, by using a receive/transmit moment of an optical signal corresponding to each wavelength in the first point cloud data, a first distance corresponding to each wavelength as the single-wavelength detection result. The determining a radar detection result based on single-wavelength detection results corresponding to the plurality of wavelengths includes: determining a second distance based on first distances corresponding to the plurality of wavelengths, where the second distance is used to represent a distance between the radar system and a detection target.

In another possible embodiment, the obtaining, based on the first point cloud data, a single-wavelength detection result corresponding to each wavelength includes: determining, by using echo intensity of an optical signal corresponding to each wavelength in the first point cloud data, a target reflectivity corresponding to each wavelength as the single-wavelength detection result. The determining a radar detection result based on single-wavelength detection results corresponding to the plurality of wavelengths includes: determining a type of the detection target based on target reflectivities corresponding to the plurality of wavelengths.

In another possible embodiment, the method further includes: determining a detection parameter of the radar system, where the detection parameter includes a transmit parameter of the multi-wavelength optical signal and a configuration parameter of the radar system; and detecting the target based on the detection parameter.

In another possible embodiment, the method further includes: receiving first information, where the first information is used to indicate the transmit parameter and/or the configuration parameter of the radar system.

According to a fifth aspect, an embodiment of this application provides a radar detection method, and the method may be applied to the controller in the movable device in any embodiment of the third aspect. In the radar detection method, the controller may receive second information from a radar system, where the second information carries first point cloud data. Therefore, the controller can control movement of the movable device based on the first point cloud data.

According to a sixth aspect, an embodiment of this application provides a radar detection method, and the method may be applied to the controller in the movable device in any embodiment of the third aspect. In the radar detection method, the controller may receive second information from a radar system, where the second information carries first point cloud data. Therefore, the controller can obtain, based on the first point cloud data, a single-wavelength detection result corresponding to each wavelength, and further determine a radar detection result based on single-wavelength detection results corresponding to a plurality of wavelengths. Therefore, in this solution, the movable device can obtain a plurality of single-wavelength detection results based on point cloud data provided by a radar system, and further obtain the final radar detection result by comprehensively considering the single-wavelength detection results. In other words, the radar detection result is comprehensively obtained based on a detection result of a multi-wavelength optical signal. Light of different wavelengths has different adaptability to an environment, a target, and the like, and this can obtain more comprehensive information, also resolve a problem in which precision of detection result is unstable due to a single application scenario caused by a limitation of the single-wavelength light on the environment and the target, helps improve accuracy of the radar detection result, and also helps reduce a security risk of an autonomous driving process caused thereby.

In a possible embodiment of the fifth aspect or the sixth aspect, the obtaining, based on the first point cloud data, a single-wavelength detection result corresponding to each wavelength includes: determining, by using a receive/transmit moment of an optical signal corresponding to each wavelength in the first point cloud data, a first distance corresponding to each wavelength as the single-wavelength detection result. The determining a radar detection result based on single-wavelength detection results corresponding to the plurality of wavelengths includes: determining a second distance based on first distances corresponding to the plurality of wavelengths, where the second distance is used to represent a distance between the radar system and a detection target.

In another possible embodiment of the fifth aspect or the sixth aspect, the obtaining, based on the first point cloud data, a single-wavelength detection result corresponding to each wavelength includes: determining, by using echo intensity of an optical signal corresponding to each wavelength in the first point cloud data, a target reflectivity corresponding to each wavelength as the single-wavelength detection result. The determining a radar detection result based on single-wavelength detection results corresponding to the plurality of wavelengths includes: determining a type of the detection target based on target reflectivities corresponding to the plurality of wavelengths.

In another possible embodiment of the fifth aspect or the sixth aspect, the method further includes: sending a first message to the radar system, where the first message is used to indicate a transmit parameter and/or a configuration parameter of the radar system.

In another possible embodiment of the fifth aspect or the sixth aspect, the movable device further includes a sensor and/or a communications module. The method further includes: obtaining an environmental parameter by using the sensor and/or the communications module; and determining the transmit parameter of the laser signal of each wavelength and/or the configuration parameter based on the environmental parameter.

According to a seventh aspect, an embodiment of this application provides a computer-readable storage medium. The computer-readable storage medium stores a computer program. When the computer program is run on a computer, the computer is enabled to perform the method according to any one of embodiments of the fourth aspect, the fifth aspect, or the sixth aspect.

According to an eighth aspect, this application provides a computer program. When the computer program is executed by a computer, the computer program is used to perform the method according to any one of embodiments of the fourth aspect, the fifth aspect, or the sixth aspect.

In a possible design, all or some of the computer programs in the eighth aspect may be stored in a storage medium that is encapsulated with the processor, or some or all of the computer programs may be stored in a memory that is not encapsulated with the processor.

In conclusion, embodiments of this application provide the radar system, the movable device, and the radar detection method. Two-dimensional scanning is performed by emitting the multi-wavelength optical signal, so that the unit of the receiver field of view of the two-dimensional scanner can have the plurality of echo signals. This can break through the limitation of a detection distance and the TOF time on the quantity of echo signals in the unit of the receiver field of view. The first point cloud data obtained based on the multi-wavelength optical signal can carry valid information carried by each wavelength optical signal, which breaks through the limitation of the single-wavelength optical signal on the environment adaptability and can effectively increase a quantity of valid information in the point cloud data. This helps improve the detection performance and detection precision of the laser radar, and helps reduce the security risk in the autonomous driving process caused thereby.

## BRIEF DESCRIPTION OF DRAWINGS

FIG. 1 is a schematic diagram of a radar detection scenario according to an embodiment of this application;
FIG. 2 is a schematic diagram of another radar detection scenario according to an embodiment of this application;
FIG. 3 is a schematic diagram of still another radar detection scenario according to an embodiment of this application;
FIG. 4 is a schematic diagram of a limitation of time of flight on a quantity of point clouds corresponding to a single-wavelength optical signal in the conventional technology;
FIG. 5 is a schematic diagram of optical signals at different frequency bands according to an embodiment of this application;
FIG. 6 is a schematic diagram of an architecture of a radar system according to an embodiment of this application;
FIG. 7 is a schematic diagram of a wavelength division module in a radar system according to an embodiment of this application;
FIG. 8 is a schematic diagram of another wavelength division module in a radar system according to an embodiment of this application;
FIG. 9 is a schematic diagram of still another wavelength division module in a radar system according to an embodiment of this application;

FIG. 10 is a schematic diagram of yet another wavelength division module in a radar system according to an embodiment of this application;

FIG. 11 is a schematic diagram of a receiver field of view of a two-dimensional scanner according to an embodiment of this application;

FIG. 12 is a schematic diagram of point clouds obtained by a radar system through two-dimensional scanning according to an embodiment of this application;

FIG. 13 is a schematic diagram of a relationship between a transmit field of view and a receiver field of view of a multi-wavelength optical signal according to an embodiment of this application;

FIG. 14 is a schematic diagram in which a processor obtains a radar detection result (a radar detection method) according to an embodiment of this application; and

FIG. 15 is a schematic diagram of target recognition effects generated when a same target is separately recognized by using a single-wavelength optical signal and a multi-wavelength optical signal.

## DESCRIPTION OF EMBODIMENTS

The following describes implementations of embodiments in detail with reference to accompanying drawings. In descriptions in embodiments of this application, "/" means "or" unless otherwise specified. For example, A/B may represent A or B. In this specification, "and/or" describes only an association for describing associated objects and represents that three relationships may exist. For example, A and/or B may represent the following three cases: Only A exists, both A and B exist, and only B exists. In addition, in the descriptions of embodiments of this application, "a plurality of" means two or more than two.

An application scenario in embodiments of this application is first described.

The technical solutions provided in embodiments of this application are applied to a scenario in which a movable device performs target detection by using a radar system.

The movable device is a device that has a moving function. The movable device may include a body and a controller. The controller is configured to control the movable device. The controller may be installed (or referred to as integrated or carried) on the body, or the controller may be disposed separately from the body of the movable device.

In embodiments of this application, the movable device may include but is not limited to a vehicle, an unmanned aerial vehicle, a ground robot, and the like.

For example, when the movable device is a vehicle, the controller may be a main controller (or one or more processing units in the main controller) of the vehicle, and the main controller is configured to control the vehicle. For example, the main controller may be configured to control driving (including autonomous driving) of the vehicle, control playing of a vehicle-mounted multimedia player, control a vehicle-mounted device (for example, a camera, a vehicle light, or a positioning system), and the like. Alternatively, the controller may be a terminal or another remote control that is in a communication connection to the main controller of the vehicle. A communication connection manner is specifically described subsequently. A terminal in embodiments of this application may include but is not limited to a mobile phone, a tablet computer, a notebook computer, a palmtop computer, and a mobile internet device (mobile internet device, MID), and examples are not exhaustive.

For example, when the movable device is an unmanned aerial vehicle, the controller may be a remote control (or one or more processing units in the remote control) of the unmanned aerial vehicle, and the remote control may remotely control the unmanned aerial vehicle to perform a flight task; or the controller may be a processor carried in a body of the unmanned aerial vehicle.

When the movable device is a ground robot, the controller may be a remote control server (or one or more processing units in the remote control server) of the ground robot, and the remote control server may be configured to control one or more ground robots to perform a ground task; or the controller may be a processor installed in a body of the ground robot.

The movable device can detect a nearby environment or a target by using the radar system. During a specific implementation, the radar system may be carried (or referred to as integrated and installed, installed, or set) on the body of the movable device. In this way, radar detection can be performed in a movement process of the movable device.

In the movable device, the controller may be in a communication connection to the radar system. In embodiments of this application, a communication connection may include a wired connection and/or a wireless connection. The wireless connection may include but is not limited to: a wireless fidelity (Wireless-Fidelity, Wi-Fi) connection, a Bluetooth connection, a near field communication (NFC) connection, and a vehicle network connection, and examples are not exhaustive.

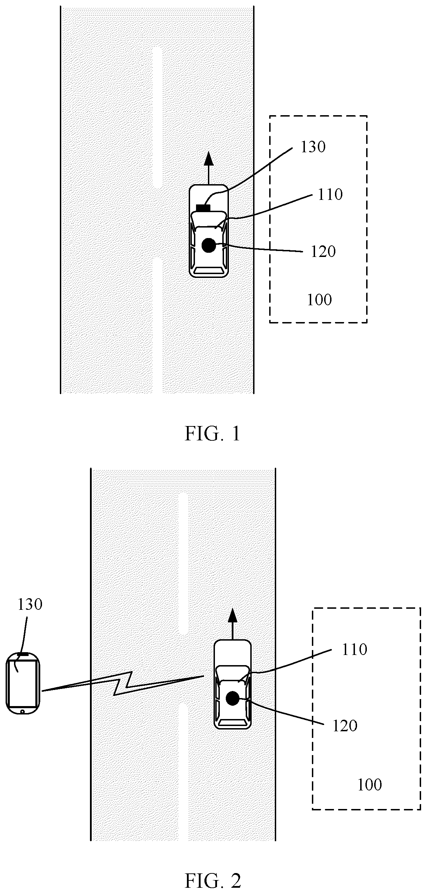

FIG. 1 to FIG. 3 are provided in embodiments of this application to describe examples of radar detection scenarios to which embodiments of this application are applied.

For example, FIG. 1 shows a radar detection scenario. As shown in FIG. 1, a movable device 100 is a vehicle, the vehicle may travel on a road, and the vehicle specifically includes a body (or referred to as a vehicle body or an automobile body) 110, a radar system 120, and a controller 130. Both the radar system 120 and the controller 130 are carried on the body 110. The radar system 120 is configured to detect a target near the vehicle 100, for example, in front of the vehicle 100. The controller 130 is in a communication connection to the radar system 120, and is configured to control driving of the vehicle 100.

In an embodiment shown in FIG. 1, the controller 130 is in a communication connection to the radar system 120, and may receive a radar detection result from the radar system 120 (specific content is described in detail subsequently). The controller 130 may control the vehicle 100 with reference to the radar detection result.

For example, FIG. 2 shows another radar detection scenario. In this scenario, the movable device 100 is a vehicle, and the radar system 120 is carried on the body 110 of the vehicle, and is configured to detect a target near the vehicle. In this scenario, the controller 130 of the vehicle (the movable device 100) is a mobile phone, that is, the mobile phone is configured to control the vehicle. The radar system 120 is also in a communication connection to the mobile phone (the controller 130). The mobile phone (the controller 130) may receive a radar detection result from the radar system 120, and control the vehicle (the movable device 100) based on the radar detection result.

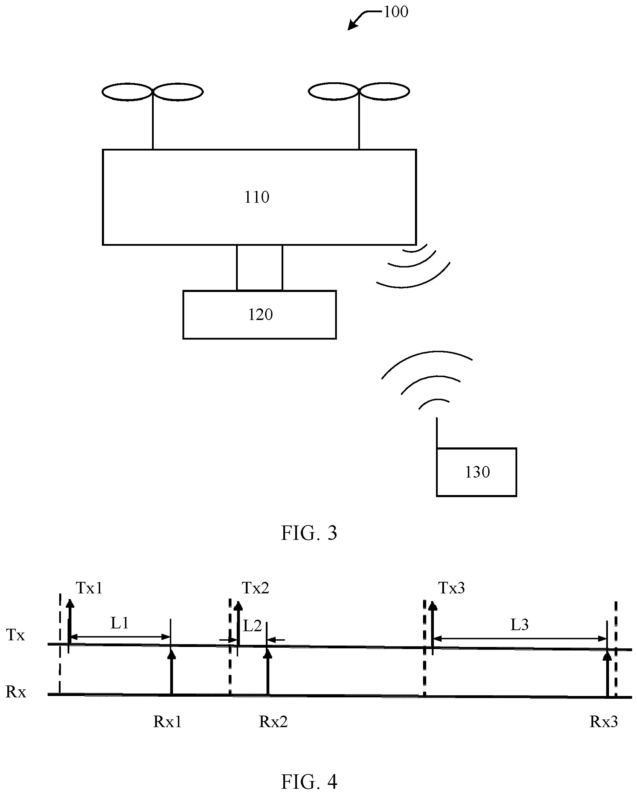

For example, FIG. 3 shows still another radar detection scenario. In this scenario, the movable device 100 is an unmanned aerial vehicle, and the unmanned aerial vehicle may travel in the air and execute a flight task. The radar system 120 is carried on the body 110 of the unmanned aerial vehicle, and is configured to detect a target near the unmanned aerial vehicle. The controller 130 of the unmanned aerial vehicle (the movable device 100) is a remote control, and is configured to control the unmanned aerial vehicle to perform the flight task. In addition, the remote control (the controller 130) is in a communication connection to the radar system 120, and the remote control may receive a radar detection result from the radar system 120, and control the unmanned aerial vehicle (the movable device 100) accordingly.

It should be noted that, in any one of the foregoing radar detection scenarios, the controller may be controlled by a user, or the controller 130 may control the movable device.

For example, in the scenario shown in FIG. 1, the controller 130 may be controlled by a driver, and perform a corresponding control function based on obtained operation information from the driver, and the radar system 120 may perform a target detection task in the scenario. That is, this application may be applied to a scenario in which the driver drives the vehicle.

Alternatively, the controller 130 may control driving of the vehicle. In this scenario, the controller 130 controls autonomous driving (or referred to as self-driving) of the vehicle, and the radar system 120 may also execute the target detection task. That is, this application may also be applied to a self-driving scenario of a vehicle.

In addition, in embodiments of this application, whether the movable device is in a moving state is irrelevant. In other words, this application may be applied to target detection in a moving scenario of the movable device, or may be applied to target detection in a stationary scenario of the movable device. For example, when the vehicle stops temporarily but does not shut down, the vehicle is stationary, and the radar system can also be used to detect the target. For another example, when the unmanned aerial vehicle is stationary in mid-air, the radar system may also be used to detect a nearby target.

In addition to the foregoing radar system 120, the movable device may further carry another sensor or another radar system. This is not particularly limited in embodiments of this application. For example, the movable device may further carry but is not limited to one or more of a speed sensor, a millimeter-wave radar, and a global positioning system (Global Positioning System, GPS) receiver.

In embodiments of this application, the radar system 120 may be specifically a laser radar system. The laser radar system may also be referred to as a laser radar, an optical radar system, a lidar (light detection and ranging), or the like, and is a radar system that transmits a laser beam to detect a target. A principle of the radar system is as follows: The laser beam is transmitted, a feedback signal (or referred to as a signal echo or an echo signal) of the laser beam is received, and the echo signal or the feedback signal is analyzed, to detect the target. Currently, the laser radar is mainly used in the fields of surveying and mapping, archaeology, geography, geomorphology, earthquake, forestry, and remote sensing and atmospheric physics.

The laser radar is one of the most important sensors in the movable device to implement autonomous driving. In other words, the radar detection result is directly related to driving security of the movable device. Therefore, detection performance of the laser radar becomes a focus of research in this field.

Currently, the laser radar 130 (for example, a vehicle-mounted laser radar) carried in the movable device is usually a single-wavelength laser radar. The single-wavelength laser radar indicates a laser radar system that detects a target by using a single-wavelength laser signal. The single-wavelength laser signal may be one laser signal, or may be a laser beam formed by a plurality of single-wavelength laser signals. It means that wavelengths of all laser signals in the laser beam are the same, and the laser beam has a single wavelength.

The movable device has a high requirement on timeliness of a radar detection result. Therefore, single-point scanning (which may also be referred to as one-dimensional scanning or 1D scanning) or two-dimensional scanning (which may also be referred to as 2D scanning) is usually performed by using the laser radar system. The single-wavelength laser radar usually performs two-dimensional scanning by emitting a laser beam at a single point. In this case, the radar system may obtain three-dimensional point cloud data. Therefore, the radar system may also be referred to as a three-dimensional radar system.

The single-wavelength laser radar has good ranging performance and volume, which can currently meet a detection requirement of the vehicle-mounted radar. However, the single-wavelength laser radar is limited in laser transmission and a receiving channel, and has a low parallelism degree, which results in a limited quantity of point clouds in a unit of a receiver field of view. Therefore, currently, only trade-off adjustment can be performed between two parameters: resolution and frame rate, to improve the detection performance of the single-wavelength laser signal as much as possible.

The detection performance of the laser radar may be represented by at least one of a quantity of point clouds and resolution per unit time and space. The higher the quantity of point clouds per unit time and space, the better the detection performance of the laser radar. The higher the resolution per unit time and space, the better the detection performance of the laser radar.

The quantity of point clouds and the resolution per unit time and space are restricted by many aspects. For example, restriction factors of the detection performance may include but are not limited to one or more of a laser capability, cooperation between the laser and a scanner, time of flight required for ranging (namely, TOF time), a laser re-frequency (namely, a repetition frequency), a quantity of point clouds generated in a single measurement, a quantity of pulses required in a single measurement, a scanning speed, a scanning range, and a frame rate.

For example, the quantity of point clouds of the laser radar per unit time and space may meet the following relationships:

$$\text{quantity of point clouds} \leq (\text{laser repetition frequency}/\text{quantity of pulses required in a single measurement})$$

$$\text{x quantity of lasers x quantity of point clouds generated in a single measurement; and}$$

$$\text{quantity of point clouds} \leq \text{quantity of lasers x quantity of point clouds generated in a single}$$

$$\text{measurement/TOF time.}$$

The resolution of the laser radar per unit time and space may meet the following relationships:

$$\text{resolution} \geq \text{TOF time x scanning speed;}$$

and

$$\text{resolution} \geq \text{scanning range x frame rate x quantity of pulses required in a single measurement/(laser re-}$$

$$\text{frequency x quantity of lasers x quantity of point clouds generated in a single measurement).}$$

Specifically, it is difficult to greatly improve the re-frequency of the laser due to a limitation of thermal performance of a chip. Therefore, it is difficult to increase the quantity of point clouds per unit time and space through adjustment of the laser re-frequency.

The quantity of point clouds generated in the single measurement is usually determined by a quantity of pixels of a detector. However, increase of the quantity of detectors affects power allocated to each pixel and a detection distance. That is, when other conditions are totally the same, a larger quantity of detectors in the laser radar indicates a shorter detection distance.

The detection distance determines the TOF time. The TOF time is maximum duration required for a round trip (flight) of an optical pulse signal (or referred to as a laser pulse signal, a laser signal, or an optical signal) between a radar and a target. When other conditions are totally the same, the longer the detection distance, the longer the TOF time, and the fewer the point clouds per unit time and space.

A limitation of TOF time on a quantity of point clouds corresponding to a single-wavelength optical signal is now described with reference to FIG. 4. In FIG. 4, an interval between two dashed lines indicates TOF time of a single unit, Tx indicates a transmit moment of an optical pulse signal, and Rx indicates an echo moment of the optical pulse signal (namely, a receive moment of an echo signal obtained after the optical pulse signal is reflected by a target). FIG. 4 shows an example of time of flight of three units. Only one single-wavelength optical pulse signal is emitted and only one echo signal is received in TOF time of each unit. A location of each Rx in TOF of the respective unit varies depending on a distance between the target and a radar system. As shown in FIG. 4, L2 < L1<L3, where L1 is duration between Tx1 and Rx1, L2 is duration between Tx2 and Rx2, and L3 is duration between Tx3 and Rx3.

As shown in FIG. 4, in TOF time of a unit, echo moments of optical pulse signals vary depending on distances between the target and the radar system. As a result, a case in which two echo signals exist in TOF time of a single unit may occur. There is no doubt that a correspondence error between an echo signal and an optical pulse signal may occur, which further results in very low precision of a detection result. Therefore, in TOF time of a single unit, the laser radar system emits the optical pulse signal only once, and receives the optical pulse signal only once, to avoid misjudgment.

As shown in FIG. 4, in TOF time of a single unit, the laser radar can transmit a maximum of one single-wavelength optical pulse signal, and receive a maximum of an echo signal of the optical pulse signal. It may be understood that no optical pulse signal may be transmitted, and/or no echo signal may be received in the TOF time of a single unit. This is not described in detail.

In this case, on the premise that a detection distance is determined, the TOF time of the unit may also be determined based on the detection distance. Therefore, a maximum quantity of point clouds that can be generated by the laser radar in the unit time (which may include TOF time of one or more units) is a product of a quantity of TOF time of units included in the unit time and a quantity of point clouds generated in a single measurement.

In addition, optical pulse signals with different wavelengths have different adaptability and applicability to an environment. For example, optical pulse signals with different wavelengths not only affect environment adaptability, an anti-noise capability, and an anti-interference capability of the laser radar, but also can affect aspects such as component selection, a chip material and process, universal application, manufacturing costs, and convenience in the laser radar.

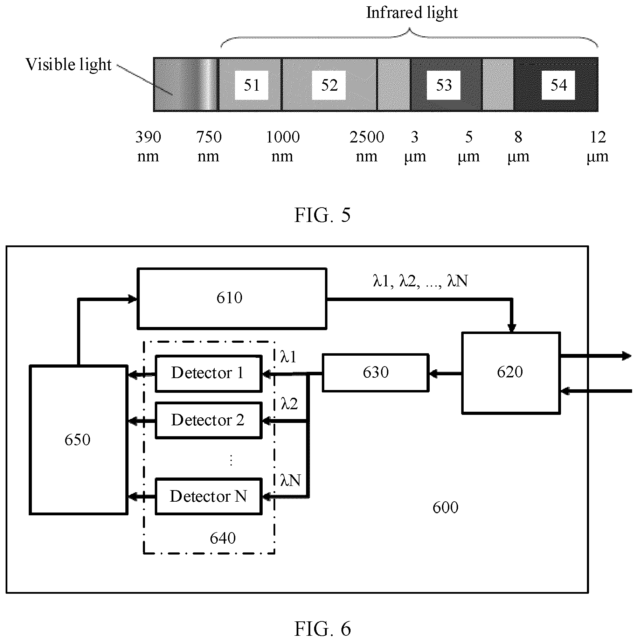

For example, FIG. 5 is a schematic diagram of optical signals in different bands. As shown in FIG. 5, bands of a laser signal that can be transmitted by a laser radar may include ultraviolet light (not shown in FIG. 5), visible light (Visible light), infrared (Infrared, IR) light, near infrared (Near Infrared, NIR) light, or short-wave infrared (Short-Wave Infrared, SWIR) light. As shown in FIG. 5, an infrared light band may be divided and includes a near infrared band (identified as 51 in FIG. 5), a short-wave infrared band (also referred to as a near infrared band and identified as 52 in FIG. 5), a medium-wave infrared (Medium-Wave Infrared, MWIR) band (also referred to as a middle infrared band and identified as 53 in FIG. 5), and a long-wave infrared (Short-Wave Infrared, SWIR) band (also referred to as a far infrared band and identified as 54 in FIG. 5).

As shown in FIG. 5, an ultraviolet light band is about 10 nm to 400 nm, a visible light band is about 390 nm to 750 nm, the near infrared band is about 700 nm to 2500 nm, the middle infrared band is about 2.5 $\mu$m to 25 $\mu$m, and the middle infrared band is about 25 $\mu$m to 500 $\mu$m. A single-wavelength laser radar may transmit a laser signal of one wavelength to the outside, and the wavelength of the laser signal is within a band range of the optical signal shown in FIG. 5.

Wavelengths of the optical signals shown in FIG. 5 are different, which also leads to different environment adaptability of laser signals with different wavelengths. Specifically, any two laser signals with different wavelengths are different in one or more aspects of atmospheric penetration, particle scattering and absorption, ambient light noise, and target reflectivity. In other words, no single-wavelength laser signal can meet excellent performance in all aspects, and no single-wavelength laser signal can adapt to various environments.

Environment adaptability of the laser signals with the different wavelengths is different. Therefore, when the single-wavelength laser signal is used for target detection, detection performance of the laser radar is inevitably affected by environment adaptability of the laser signal. In other words, poor environment adaptability of the single-wavelength laser radar results in unstable detection performance of the laser radar.

An example is used for description. A laser radar 1 detects a target by emitting an optical pulse signal with a wavelength 1 to the outside. The optical pulse signal with the wavelength 1 has good adaptability to a rainy and snowy environment, and can obtain a radar detection result with high accuracy in the rainy and snowy environment. However, the optical pulse signal with the wavelength 1 has poor adaptability to a sandstorm environment, and can obtain a radar detection result with low accuracy.

On this premise, if the laser radar 1 is carried on a vehicle, and the vehicle implements autonomous driving by using the laser radar (with reference to another sensor or the like, which is not described in detail), when the vehicle travels in the rainy and snowy environment, the laser radar can obtain the good radar detection result. This helps the vehicle avoid an obstacle in time or adopt another driving policy, and can reduce a security risk in an autonomous driving process of the vehicle to some extent. However, when the vehicle travels in the sandstorm environment, the laser radar obtains the radar detection result with low accuracy. It is very likely that an obstacle cannot be accurately identified. As a result, a security accident such as collision between the vehicle and the obstacle or tailgating is caused, affecting life and property security.

In conclusion, the single-wavelength laser radar is limited by the detection distance, the TOF time, the environment adaptability of the laser signal, and the like; and the single-wavelength laser radar has only an echo signal of one optical pulse signal in TOF time of a unit, and cannot break through the limitation of the TOF time on the quantity of point clouds and the resolution. In addition, a link transmission characteristic, a target reflection characteristic, and an ambient light noise characteristic of the single-wavelength optical pulse signal are unique, which also results in a small quantity of point clouds corresponding to the single-wavelength laser radar, and a small quantity of valid information carried in the point clouds. This also greatly affects the detection performance of the laser radar, and the detection performance of the laser radar is poor.

Embodiments of this application provide a radar system and a radar detection method thereof. The radar system may be applied to a radar detection scenario in any one of the foregoing scenarios. For example, in any scenario shown in FIG. 1 to FIG. 3, the radar system provided in embodiments of this application may be used to implement a corresponding detection function.

FIG. 6 is a schematic diagram of a system architecture of a radar system. As shown in FIG. 6, the radar system 600 includes a laser module 610, a two-dimensional scanner 620, a wavelength division module 630, a detection module 640, and a processor 650. The laser module 610 is configured to generate a multi-wavelength optical signal. The two-dimensional scanner 620 is configured to: perform two-dimensional scanning by using the multi-wavelength optical signal, and receive an echo signal located in a receiver field of view of the two-dimensional scanner 620, where the echo signal is a reflected signal formed after a scanned object is irradiated by the multi-wavelength optical signal, and a unit of a receiver field of view of the two-dimensional scanner includes a plurality of echo signals. The wavelength division module 630 is configured to perform optical splitting processing on the echo signal to obtain a plurality of single-wavelength optical signals. The detection module 640 is configured to separately convert the plurality of single-wavelength optical signals into electrical signals respectively corresponding to the plurality of wavelengths. The processor 650 is configured to obtain first point cloud data based on the electrical signals corresponding to the wavelengths.

In the radar system 600 shown in FIG. 6, the laser module 610 may emit the multi-wavelength optical signal, so that the unit of the FOV of the two-dimensional scanner includes the plurality of echo signals when the two-dimensional scanner 620 performs two-dimensional scanning. Specifically, when the multi-wavelength optical signal includes optical signals (or referred to as laser signals, laser pulse signals, optical pulse signals, or the like) with N wavelengths: $\lambda 1$, $\lambda 2$, ..., and $\lambda N$ shown in FIG. 6, where N is an integer greater than 1, the unit of the FOV of the two-dimensional scanner includes N echo signals. It may be understood that the N echo signals are in a one-to-one correspondence with the optical signals with the N wavelengths. As shown in FIG. 6, wavelengths of the N echo signals are also respectively $\lambda 1$, $\lambda 2$, ..., and $\lambda N$, and are in a one-to-one correspondence with the N wavelengths of the optical signals output by the laser module.

Therefore, compared with the conventional technology in which a unit of a receiver field of view of a single-wavelength laser radar can include only one echo signal, this application can break through a limitation of TOF time on a quantity of point clouds, also break through a limitation of a single-wavelength optical signal on environment adaptability, effectively increase a quantity of point clouds in the unit of the receiver field of view, and also increase valid information carried in point cloud data because of increase of the quantity of point clouds. This helps improve detection performance of a laser radar. In conclusion, the radar system provided in this application can effectively improve the detection performance of the laser radar, and help reduce a security risk in an autonomous driving process caused thereby. This technical effect is specifically described subsequently.

The radar system is further described.

The radar system provided in this embodiment of this application is actually a laser radar system. First, the laser module in the radar system is specifically described.

The laser module is configured to generate and emit the multi-wavelength optical signal, and the multi-wavelength optical signal may include a plurality of single-wavelength optical signals. It should be noted that the plurality of single-wavelength optical signals included in the multi-wavelength optical signal may be output at the same time, or may be output in a time-division manner, which is specifically described subsequently. Based on this, the laser module may also be referred to as a multi-wavelength laser source (Multi-wavelength Laser Source).

The laser module may include one or more lasers. The lasers may include a single-wavelength laser and a tunable laser.

The single-wavelength laser is configured to generate an optical pulse signal with a single wavelength, and wavelengths of optical pulse signals generated by any two single-wavelength lasers are different. For example, the laser module may include five single-wavelength lasers, and the single-wavelength lasers are configured to generate and emit single-wavelength optical pulse signals with 905 nm, 940 nm, 1064 nm, 1310 nm, and 1550 nm respectively.

The tunable laser may be configured to generate an optical pulse signal with a plurality of wavelengths. For example, the tunable laser may be tuned to generate and separately emit single-wavelength optical pulse signals with 905 nm, 940 nm, 1064 nm, 1310 nm, and 1550 nm.

When the laser module includes only one laser, the laser may be a tunable laser. In this case, the multi-wavelength optical signal includes a plurality of single-wavelength optical signals. Generation moments of the single-wavelength optical signals generated by the tunable laser are different. That is, the tunable laser may sequentially generate the plurality of single-wavelength optical signals, and the single-wavelength optical signals may be sequentially emitted.

Alternatively, the laser module may include a plurality of lasers. In this case, the laser module may include a tunable laser and/or a single-wavelength laser. In this case, the multi-wavelength optical signal includes one optical signal including a plurality of wavelengths, or a plurality of single-wavelength optical signals.

For example, the laser module includes N lasers; and when the laser module includes N single-wavelength lasers, the laser module may generate and output single-wavelength optical signals with N wavelengths; or when the laser module may include (N - 1) single-wavelength lasers and one tunable laser, the laser module may generate and output at least (N - 1) single-wavelength optical signals.

When the laser module includes the plurality of lasers, the plurality of lasers may generate and emit the plurality of single-wavelength optical signals at the same time, or generate and emit the plurality of single-wavelength optical signals in a time-division manner.

In this embodiment of this application, there is no particular limitation on a wavelength value of the multi-wavelength optical signal that can be generated and emitted by the laser module. The foregoing wavelengths are merely examples for description. In an actual scenario, the laser module may use various lasers that meet respective band requirements.

For example, in an embodiment, the wavelengths of the multi-wavelength optical signal may be determined based on one or more aspects of atmospheric penetration, weather adaptability, a water absorption capability, a target reflectivity, sunlight, or human eye security. In this case, refer to Table 1. Table 1 shows impact of the foregoing plurality of impact factors on optical signals with different wavelengths.

**Table 1**

| Impact factor | Comparison of wavelengths of optical signals |
|---|---|
| Atmospheric penetration | There are three large extinction windows at bands in 0.95 $\mu$m to 1 $\mu$m, 1.1 $\mu$m and 1.2 $\mu$m, and 1.3 $\mu$m to 1.5 $\mu$m. |
| Weather adaptability | The longer a wavelength, the better a scattering characteristic and the better transmittance in a bad weather. |
| Water absorption | From 500 nm, the longer a wavelength, the more serious absorption. |
| Target reflectivity | The longer a wavelength, the smaller a target reflectivity difference, and the smaller multipath reflection caused by a snowy day. |
| Sunlight | There are two relative lowest sunlight windows around bands in 1.15 $\mu$m, and 1.34 $\mu$m to 1.45 $\mu$m, and the sunlight at bands in 940 nm and 1550 nm is also weak. |
| Human eye security | The longer a wavelength, the more secure the human eye; and a security level of the human eye is greatly improved after 1400 nm. |

Impact of an environment in a radar detection process is mainly reflected in two aspects: Different weathers affect attenuation of a laser signal in the atmosphere, and the different weathers also affect increase or decrease of the target reflectivity. For example, attenuation of the laser signal in the atmosphere is different in weathers such as rain, snow, sand and dust, and haze. For another example, the target reflectivity increases or decreases to different degrees in the weathers such as rain, snow, sand and dust, and haze.

Attenuation in the atmospheric is determined by an extinction coefficient, and the extinction coefficient is related to absorption and scattering. In other words, the extinction coefficient is related to an absorption coefficient and a scattering coefficient. Absorption of the optical signal by the atmosphere is mainly caused because energy of the optical signal is absorbed by molecules such as water and carbon dioxide ($CO_2$) and converted into thermal energy, chemical energy, and/or the like, which is mainly reflected as attenuation of light intensity. Scattering of the laser signal by the atmosphere is a process in which a part of light deviates from an original propagation direction when the optical signal passes through an uneven medium, and is mainly caused by suspended particles or macromolecules, which is reflected as not only attenuation of light but also deterioration of beam quality. In addition, rain, snow, sand and dust, and the like often cover a surface of the detection target in the environment. In this case, rain, snow, sand and dust, and the like that cover the surface of the detection target also cause a change in the target reflection characteristic. As a result, the reflectivity decreases distribution of reflected light intensity changes and a direction of the reflected light intensity changes.

In this embodiment of this application, when target detection is performed by using the multi-wavelength optical signal, and the optical signals with different wavelengths are used to detect the same target (or referred to as the detection target), a difference between the echo signals is also caused due to different target reflectivities. Therefore, the processor may perform differential processing based on the difference between the echo signals of the optical signals with the different wavelengths. This can enhance a recognition probability of a material, a type, and the like of the target, thereby providing richer and more accurate data support for autonomous driving perception fusion to determining.

In addition to the impact of the weather, interference of the sunlight or other possible ambient light to a receiving process of the echo signal also needs to be considered. A band with weaker background interference light is selected as possible to avoid a false alarm or reduction of a dynamic range caused by the ambient light to a high-sensitivity detector. For example, in Table 1, there are two relative lowest sunlight windows around the bands in 1.15 μm and 1.34 μm to 1.45 μm, and the sunlight at the bands in 940 nm and 1550 nm is also weak.

Human eye security may be represented by using a human eye security threshold, and human eye security thresholds corresponding to optical signals with different wavelengths are different. A higher human eye security threshold corresponding to an optical signal indicates higher allowed emergent light power, which is more conducive to improving the detection performance of the radar system, reducing a quantity of transmit channels, and having low requirements on a receive end and a scanning end of the two-dimensional scanner.

As shown in Table 1, the longer the wavelength of the optical signal, the more secure the human eye. When a wavelength is long, an optical signal does not form a clear image on the retina of the human eye. In addition, a water absorption characteristic in the band is strong, and water in the human eyeball can absorb a part of energy, so that energy on the retina is greatly reduced, thereby protecting security of the human eye.

For example, the human eye security threshold may be 1400 nm or 1550 nm. That is, an optical signal whose wavelength exceeds 1400 nm or 1550 nm may be considered as a secure band of the human eye. For example, when a wavelength of an optical signal is greater than 1400 nm, the lasers are allowed to emit higher power per unit time and per unit space. These high-power lasers can significantly improve ranging performance of the system, for example, ranging over 300 m. Energy of a single beam is alternatively distributed to a plurality of detector pixels to improve system resolution.

In addition, because performance and human eye security requirements of optical signals generated and output by different lasers are different, a dynamic detection range of an optical signal (with a wavelength) of the radar system can be improved, and even a laser that meets a full (wavelength) dynamic range may be used together, thereby detecting the target in the full dynamic range. In contrast, a dynamic range of a conventional laser radar is only 60 dB to 100 dB. When power of the laser radar is low, the farthest measurement distance is affected. When the power of the laser radar is high, saturation occurs and ranging precision decreases. However, the radar system provided in this embodiment of this application can avoid this problem, and even meet a target detection requirement of the full dynamic range.

The laser needs to meet a requirement for generating optical pulse signals with a plurality of preset wavelengths. In addition, a structure type of the laser is not particularly limited in this embodiment of this application. For example, the laser in the laser module may include but is not limited to one or more of a solid-state laser, a fiber laser, a semiconductor laser, a gas laser, or a dye laser. For types of lasers applicable to the optical pulse signals with different wavelengths, refer to subsequent Table 1. Details are not described herein again.

Then, the detection module in the radar system is described.

The wavelengths of the single-wavelength optical signals that enter the detection module after the optical signals are processed by the wavelength division module are different. Therefore, the detection module may also include one or more detectors (Detectors), configured to perform optical-to-electrical conversion processing on the single-wavelength optical signals with different wavelengths.

The detector may include a single-wavelength detector and a multi-wavelength detector.

Any one of the single-wavelength detectors is configured to receive and process the single-wavelength optical signal with one wavelength. In other words, the single-wavelength detector is configured to perform optical-to-electrical conversion processing on the single-wavelength optical pulse signal. In the detection module 640, optical pulse signals applicable to at least two single-wavelength detectors have different wavelengths. For example, the detection module 640 may include five single-wavelength detectors, and the single-wavelength detectors are configured to perform optical-to-electrical conversion processing on single-wavelength optical pulse signals with 905 nm, 940 nm, 1064 nm, 1310 nm and 1550 nm respectively.

The multi-wavelength laser is applicable to optical pulse signals with a plurality of wavelengths, that is, the multi-wavelength detector is configured to receive and process the single-wavelength optical signals with the plurality of wavelengths. Specifically, the multi-wavelength detector may implement optical-to-electrical conversion processing on the optical pulse signals with the plurality of wavelengths. For example, the multi-wavelength detector may be configured to perform optical-to-electrical conversion processing on single-wavelength optical pulse signals with 905 nm, 940 nm, 1064 nm, 1310 nm, 1550 nm.

Therefore, when the detection module includes only one detector, the detector may be a multi-wavelength detector.

Alternatively, when the detection module includes a plurality of detectors, the plurality of detectors may include but are not limited to multi-wavelength detectors and/or single-wavelength detectors. For example, the detection module includes N detectors; and when the detection module includes N single-wavelength detectors, as shown in FIG. 6, one single-wavelength detector may be configured to process a single-wavelength optical signal with one wavelength, and n echo signals with wavelengths of λ1, λ2, ..., and λN are also processed by the N detectors; or when the detection module includes (N - 1) single-wavelength detectors and one multi-wavelength detector, the detection module may be configured to perform optical-to-electrical conversion processing on at least (N - 1) single-wavelength optical signals.

The detector needs to meet a requirement for processing the optical pulse signals with the plurality of preset wavelengths. In addition, a type or a structure of the detector is not particularly limited in this application. For example, the detector in the detection module may include but is not limited to an indium gallium arsenide (namely, indium gallium arsenide, InGaAs) detector and a silicon (Si) detector. Specifically, the detector may specifically include but is not limited to an avalanche photodiode (avalanche photodiode, APD) detector, a P-type semiconductor-impurity-N-type semiconductor (Positive-Intrinsic-Negative, PIN) detector, a single photon avalanche diode (Single Photon Avalanche Diode, SPAD) detector, a silicon photomultiplier (Silicon photomultiplier, SiPM) detector, or the like.

For example, this application further provides Table 2. Table 2 specifically shows types of lasers and detectors applicable to optical signals with different wavelengths.

**Table 2**

| | | Wavelength of an optical signal | 850 nm to 940 nm | 1064 nm | | 1350 nm | | 1550 nm |
|---|---|---|---|---|---|---|---|---|
| Laser | | Type | Semiconductor laser | Solid-state laser | Fiber laser | Semiconductor laser | Solid-state laser | Fiber laser |
| | | Typical gain material | GaAs | Nd:YAG Nd:YLT | Yb-doped Fiber | InP | Er: Glass | Er-doped Fiber |
| | | Pump source | - | GaAs | GaAs | - | GaAs | GaAs |
| | | Seed source | - | - | GaAs | - | InP | InP |
| | | Water absorption | Good | Medium | | Poor | | Poor |
| Detector | | Type | APD/SPADs | APD | | SPADs | | APD/SPADs |
| | | Material | Silicon (Silicon) | InGaAs/SiGe | | | | |

As shown in Table 2, the optical pulse signals with different wavelengths are applicable to the different types of lasers and detectors. GaAs represents gallium arsenide, InP represents indium phosphide, Er-Glass represents erbium-doped glass, Er-doped Fiber represents erbium-doped fiber, Nd:YAG represents yttrium aluminum garnet crystal, Nd:YLT represents neodymium doped lithium yttrium fluoride, and SiGe represents silicon-germanium. The composition or doping of these materials determines a band of a laser. In addition, a type of a material determines a type of a laser. As shown in Table 2, the radar system provided in this application may use but is not limited to the semiconductor laser, the solid-state laser, or the like. It may be understood that Table 2 is an example, and an actual scenario may include but is not limited to the case shown in Table 2. For example, the solid-state laser may further include but is not limited to a diode-pumped solid-state laser (DPSSL), a lamp pumped solid-state laser, and a fiber laser, and examples are not exhaustive.

For example, an optical signal with 850 nm to 940 nm is applicable to the semiconductor laser, an optical signal with 1064 nm is applicable to the solid-state laser or the fiber laser, an optical signal with 1035 nm is applicable to the semiconductor laser or the solid-state laser, and the optical signal with 1550 nm is applicable to the fiber laser.

For example, the optical signal with 850 nm to 940 nm is applicable to the APD detector or the SPADs detector, the optical signal with 1064 nm is applicable to the APD detector, the optical signal with 1035 nm is applicable to the SPADs detector, and the optical signal with 1550 nm is applicable to the APD detector or the SPADs detector. The APD detector and the SPADs detector that are applicable to the optical signal with 850 nm to 940 nm may be detectors of a silicon material, and other detectors may be detectors of an indium gallium arsenide material.

In a specific embodiment of Table 2, in the radar system provided in this embodiment of this application, lasers with at least two wavelengths may be deployed, and detectors with the two wavelengths may be deployed correspondingly. In this way, the radar system can generate optical signals with corresponding wavelengths by using different lasers to detect the radar. Therefore, features of lasers and detectors, such as beam quality of the lasers, sensitivity of the detectors, and noise may be used to further optimize costs and a volume of the radar system. How to select the laser and the detector to optimize the radar system is not discussed herein, and an optimization effect can be achieved through appropriate selection and arrangement.

Then, the wavelength division module in the radar system is described in detail.

As described above, the wavelength division module is configured to perform optical splitting processing on the echo signal to obtain the plurality of single-wavelength optical signals. As shown in FIG. 6, the wavelength division module 630 may be disposed between the two-dimensional scanner 620 and the detection module 640.

For example, in an embodiment, the wavelength division module 630 may be configured to perform optical splitting processing on the echo signals at the same time to obtain the plurality of single-wavelength optical signals, where wavelengths of any two single-wavelength optical signals are different.

Compared with the conventional technology in which a ranging error or insufficient ranging precision may occur between a plurality of optical pulse signals with a single wavelength and a plurality of corresponding echo signals, this application is used to detect the target by using the plurality of optical pulse signals with different wavelengths, so that the optical pulse signals with the wavelengths can accurately correspond to the echo signals even if emergent moments and detection distances of the plurality of optical pulse signals with different wavelengths are the same, and receiving moments of the echo signals with the different wavelengths are different. In this case, even if the wavelength division module processes all the echo signals at the same time, no misjudgment occurs. This can also resolve a limitation of TOF time of a unit on a quantity of point clouds in the conventional technology, and details are described subsequently.

In a possible embodiment of this application, the wavelength division module may be disposed between the laser module and the two-dimensional scanner. In this case, the wavelength division module may be configured to: perform optical splitting processing or light converging processing on the multi-wavelength optical signal output by the laser module, and provide the multi-wavelength optical signal to the two-dimensional scanner for two-dimensional scanning.

For example, the laser module may output N optical pulse signals with different wavelengths by using a plurality of lasers. These optical pulse signals may form an optical signal beam after being performed light converging processing by the wavelength division module for emission by using the two-dimensional scanner.

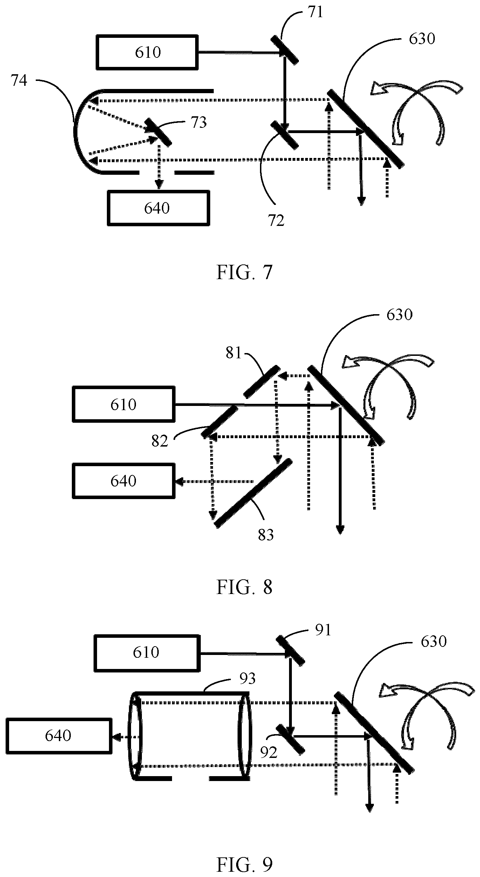

For example, the laser module may output the N optical pulse signals with different wavelengths by using the plurality of lasers at the same time, and these optical pulse signals are mixed into a light beam for emission. In this case, the light beam may form a plurality of single-wavelength optical signals after being performed optical splitting processing by the wavelength division module for emission by using the two-dimensional scanner. Descriptions are provided subsequently with reference to FIG. 7.

In this embodiment of this application, the wavelength division module may include but is not limited to one or more of a beam splitter, an optical fiber, a lens, a prism, a reflector, or a diffraction component.

For example, the wavelength division module may include only one beam splitter. For example, in the radar system shown in FIG. 6, the wavelength division module 630 may be specifically one beam splitter (Beam Splitter).

For example, the wavelength division module may alternatively include one or more optical elements other than the beam splitter. In this case, refer to FIG. 7 to FIG. 10. A solid arrow represents the multi-wavelength optical signal (namely, a transmit light ray), a dashed arrow represents the echo signal (namely, a receive light ray), a black thick line represents a reflector, and an ellipse represents a lens module. The lens module may include at least one of a lens, a prism, and a reflector. This is not particularly limited.

FIG. 7 is a schematic diagram of a wavelength division module in a radar system according to this embodiment of this application. As shown in FIG. 7, the transmit light ray emitted by the laser module 610 arrives at the two-dimensional scanner 630 after being reflected by a reflector 71 and a reflector 72. The two-dimensional scanner 630 may rotate within a preset range, and the transmit light ray is emitted after being reflected by the two-dimensional scanner 630. Correspondingly, the receive light rays with different wavelengths are also received in a receiver field of view of the two-dimensional scanner 630, reflected to a lens module 73, and reflected to a reflector 74 by using the lens module 73. Further, the receive light rays may enter the detection module 640.

In a possible embodiment in FIG. 7, the reflector 74 may be connected to a beam splitter. After the beam splitter performs further optical splitting processing, each single-wavelength optical signal may enter a detector of a corresponding wavelength.

In the embodiment shown in FIG. 7, the wavelength division module includes the reflector 71, the reflector 72, the lens module 73, and the reflector 74. The reflector 71 and the reflector 72 are configured to perform optical splitting processing or light converging processing on the multi-wavelength optical signal. The lens module 73 and the reflector 74 (or may further include the beam splitter) are configured to perform optical splitting processing on the echo signals.

In addition, in the embodiment shown in FIG. 7, the optical elements form a coaxial optical path. In other words, the radar system is a coaxial optical system.

FIG. 8 is a schematic diagram of another wavelength division module in a radar system according to an embodiment of this application. As shown in FIG. 7, the transmit light ray emitted by the laser module 610 is directly emitted by the two-dimensional scanner 630. The unit of the receiver field of view of the two-dimensional scanner 630 may have the plurality of echo signals with different wavelengths. These receive light rays may be reflected to a reflector 83 after being reflected by using a reflector 81 or a reflector 82, and then reflected by using the reflector 83.

In the embodiment shown in FIG. 8, the wavelength division module includes the reflector 81 to the reflector 83. The reflector 81 to the reflector 83 are configured to perform optical splitting processing on the echo signals.

In addition, in the embodiment shown in FIG. 8, the optical elements form a coaxial optical path. In other words, the radar system is a coaxial optical system.

FIG. 9 is a schematic diagram of a still another wavelength division module in a radar system according to an embodiment of this application. As shown in FIG. 9, the transmit light ray emitted by the laser module 610 is emitted by using a reflector 91, a reflector 92, and the two-dimensional scanner 630. The unit of the receiver field of view of the two-dimensional scanner 630 may have the plurality of echo signals with different wavelengths. These receive light rays arrive at the detector after being reflected by a lens module 93, or enter the detector after being processed by a beam splitter after a lens module 93.

In the embodiment shown in FIG. 9, the wavelength division module includes the reflector 91, the reflector 92, and the lens module 93. The reflector 91 and the reflector 92 are configured to perform optical splitting processing or light converging processing on the multi-wavelength optical signal. The lens module 93 (or may further include the beam splitter) is configured to perform optical splitting processing on the echo signals.

In addition, in the embodiment shown in FIG. 9, the optical elements form a coaxial optical path. In other words, the radar system is a coaxial optical system.

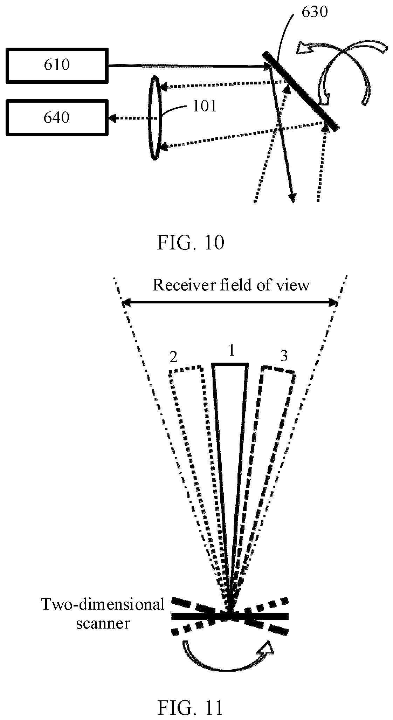

FIG. 10 is a schematic diagram of yet another wavelength division module in a radar system according to an embodiment of this application. As shown in FIG. 10, the transmit light ray emitted by the laser module 610 is directly emitted by the two-dimensional scanner 630. The unit of the receiver field of view of the two-dimensional scanner 630 may have the plurality of echo signals with different wavelengths. These receive light rays arrive at the detector after being reflected by a lens module 101, or enter the detector after being processed by a beam splitter after a lens module 101.

In the embodiment shown in FIG. 10, the wavelength division module includes the lens module 101, specifically configured to perform optical splitting processing on the echo signals. In the radar system shown in FIG. 10, the optical elements form an off-axis optical path. In other words, the system is an off-axis optical system.

FIG. 7 to FIG. 10 show examples. In this embodiment of this application, there is no particular limitation on a wavelength division element used in a radar system, and there is no particular limitation on whether an optical path formed by the optical elements is a coaxial optical path or an off-axis optical path, and the radar system is an off-axis optical system or a coaxial optical system. In an actual scenario, this solution may be implemented in cooperation with the foregoing laser module, two-dimensional scanner, and detection module that can output the multi-wavelength optical signal.

The two-dimensional scanner in the radar system is described in detail.

In this embodiment of this application, the radar system performs scanning by using the two-dimensional scanner, and the two-dimensional scanner has a capability of performing scanning in a two-dimensional plane.

It may be understood that the two-dimensional scanner also has a capability of one-dimensional scanning (single-point scanning), and the radar system provided in this embodiment of this application can also be used to implement one-dimensional scanning. Details are not described herein. This solution is described below in a scenario in which the two-dimensional scanner performs two-dimensional scanning.

As described above, for example, as shown in FIG. 7 to FIG. 10, the two-dimensional scanner may rotate within the preset range. During the movement of the two-dimensional scanner, the optical pulse signal can be emitted and the echo signal can be received. For example, the two-dimensional scanner may sequentially rotate from left to right, and each time a unit angle is rotated, the two-dimensional scanner emits an optical pulse signal to the outside, and receives an echo signal of the optical pulse signal in a current receiver field of view. In this way, the two-dimensional scanner continuously rotates, emits an optical signal, and receives an echo signal, thereby implementing two-dimensional scanning.

An emergent location of any one of the multi-wavelength optical signal falls within a receiver field of view corresponding to the multi-wavelength optical signal. In this case, refer to FIG. 11. FIG. 11 specifically is a schematic diagram of the receiver field of view of the two-dimensional scanner. In a rotation process of the two-dimensional scanner (Scanner), the receiver field of view (namely, Receiver FOV, receiver FOV) of a sector area shown in FIG. 11 may be formed. In the receiver field of view, the multi-wavelength optical signal may be emitted at a location shown in a location 1 (which may be denoted as Tx laser), and a location 2 (which may be denoted as Possible Echo 1) and a location 3 (which may be denoted as Possible Echo 2) are locations of receive possible echo signals of the multi-wavelength optical signal.

In a two-dimensional scanning process, after the laser signal is incident into air, a divergence angle of the original laser signal increases. Therefore, after being reflected by the target (an ideal target is usually a Lambertian reflector), the laser signals present reflected light rays with a plurality of angles in unspecific directions. However, in the two-dimensional scanning process, the two-dimensional scanner continues to move after emitting the laser. A process of waiting for receiving the laser echo is included. Therefore, a beam divergence angle, a light spot at the target, a possible incident angle of a target echo within TOF time, and the like need to be considered in the receiver FOV In addition, the receiver FOVs in two scanning directions need to be greater than the divergence angle of a transmit beam.

It should be noted that in the process of performing two-dimensional scanning by using the multi-wavelength optical signal in this embodiment of this application, the multi-wavelength optical signal includes the optical signals with the plurality of wavelengths, wavelengths of any two optical signals are different, and transmit parameters of the optical signals with different wavelengths may be different. The transmit parameter in this embodiment of this application may include but is not limited to one or more of a divergence angle, an emergent location, an emergent moment, an emergent angle, a location of a receiver field of view, a size of the receiver field of view, or time of flight.

Specific descriptions are provided below.

For example, divergence angles of the optical signals with the wavelengths in the multi-wavelength optical signal may be the same, or may be totally different, or may not be totally the same (divergence angles of transmit signals with at least two wavelengths are the same).

For example, emergent moments of the optical signals with the wavelengths in the multi-wavelength optical signal may be the same, not totally the same, or totally different. For example, in N optical signals whose wavelengths are respectively λ1, λ2, ..., and λN, the N optical signals may be sequentially generated and emitted by the laser module. In this way, emergent moments of the N optical signals are totally different. For another example, N optical signals included in the multi-wavelength optical signal may be generated by N single-wavelength lasers in the laser module, and emitted at the same time. In this way, emergent moments of the N optical signals may be totally the same. For another example, in N optical signals included in the multi-wavelength optical signal, some optical signals may be generated and emitted by a plurality of single-wavelength lasers at the same time, and some optical signals may be generated and sequentially emitted by a tunable laser. That is, emergent moments of the N optical signals are not totally the same.

For example, emergent angles of the optical signals with the wavelengths in the multi-wavelength optical signal are different. As described above, the two-dimensional scanner may move continuously. In this case, when the emergent moments of the N optical signals are different, emergent angles at which the optical signals are emitted by using the two-dimensional scanner are also different, and locations of receiver field of view are also different. In addition, receiver field of view corresponding to the N optical signals in the multi-wavelength optical signal may be different.

For example, time of flight of the optical signals with the different wavelengths may be different, the same, or not totally the same.

In this embodiment of this application, the multi-wavelength optical signal is emitted by using the two-dimensional scanner in the radar system, and the echo signals returned by the target are received. In this case, the unit of the receiver FOV of the two-dimensional scanner may include the plurality of echo signals. In this case, the multi-wavelength optical signal includes the optical signals with the plurality of wavelengths, and parameters of minimum receiver fields of view corresponding to the optical signals with all wavelengths are the same, not totally the same, or totally different. The parameter of the minimum receiver field of view includes one or more of a location, a size, or a quantity of the minimum receiver field of view.

A minimum value of the unit of the receiver FOV (namely, the minimum receiver field of view) of the two-dimensional scanner is a product of a scanning speed of the two-dimensional scanner and the time of flight. The optical signals with the different wavelengths may have different time of flight. Therefore, sizes of the minimum receiver fields of view corresponding to different optical signals may be different. In addition, the emergent moments and emergent durations of the optical signals with the different wavelengths may be different, and the locations and quantities of the minimum receiver fields of view corresponding to the optical signals with the different wavelengths may also be different.

Subsequently, for ease of description, a minimum receiver field of view corresponding to an optical signal may be considered as a "pixel". It should be noted that the pixel is not equivalent to the unit of the receiver FOV of the two-dimensional scanner. The pixel is the minimum receiver FOV corresponding to the optical signal in the target detection process, but the unit of the receiver FOV is specific to the two-dimensional scanner. One unit of a receiver FOV of the two-dimensional scanner may include one pixel or more pixels.

For example, the multi-wavelength optical signal may include a first wavelength optical signal and a second wavelength optical signal, and a wavelength of the first wavelength optical signal is different from a wavelength of the second wavelength optical signal. In this case, when a transmit parameter of the first wavelength optical signal is different from a transmit parameter of the second wavelength optical signal, a parameter of a minimum receiver field of view corresponding to the first wavelength optical signal is different from a parameter of a minimum receiver field of view corresponding to the second wavelength optical signal.

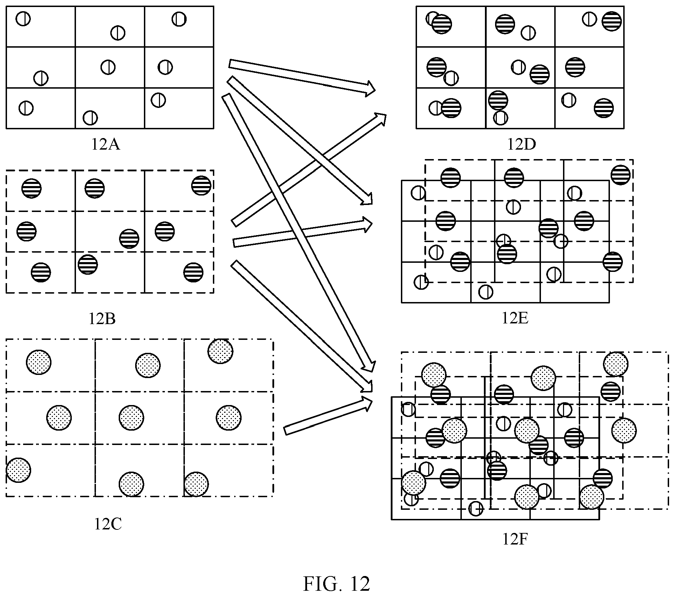

FIG. 12 is a schematic diagram of point clouds obtained by the radar system through two-dimensional scanning. 12A, 12B, and 12C in FIG. 12 are schematic diagrams of point clouds corresponding to optical signals whose wavelengths are λ1, λ2, and λ3. 12A in FIG. 12 is a schematic diagram of point clouds obtained by the radar system through target detection by using an optical signal 1 whose wavelength is λ1; 12B in FIG. 12 is a schematic diagram of point clouds obtained by the radar system through target detection by using an optical signal 2 whose wavelength is λ2; and 12C in FIG. 12 is a schematic diagram of point clouds obtained by the radar system through target detection by using an optical signal 3 whose wavelength is λ3.

In 12A, 12B, and 12C in FIG. 12, any rectangular area may be considered as a pixel, or may be considered as a minimum scan field of view of the two-dimensional scanner, and an azimuth corresponding to each pixel is radar resolution of the radar system. A size of a unit rectangular area (namely, a pixel) is related to time of flight (TOF) of an optical signal. As shown in FIG. 12, TOF time of the optical signal 1 and TOF time of the optical signal 2 are the same, and a pixel size corresponding to the optical signal 1 is the same as a pixel size corresponding to the optical signal 2. However, the TOF time of the optical signal 1 and TOF time of the optical signal 3 are different, and the pixel size corresponding to the optical signal 1 is different from a pixel size corresponding to the optical signal 3.

A dot in FIG. 12 represents a possible receiving location of an echo signal, that is, the dot represents the receiving location of the echo signal in a unit pixel. Specifically, the receiving location of the echo signal in the pixel is associated with a scanning trajectory and the distance to the target. For any single-wavelength optical signal, only one echo signal is allowed in one pixel. For example, in 12A, 12B, and 12C in FIG. 12, any pixel includes only one dot (echo signal). As described above, in this case, a quantity of point clouds and the resolution of the radar system are limited by the TOF time.

In this embodiment of this application, radar detection is performed by using the multi-wavelength light. In this case, 12D, 12E, and 12F in FIG. 12 are schematic diagrams of point clouds in a multi-wavelength scanning scenario.

12D in FIG. 12 is a schematic diagram of point clouds obtained by the radar system through target detection by using the optical signal 1 and the optical signal 2 in a same receiver FOV As shown in 12D in FIG. 12, when the optical signal 1 and the optical signal 2 are received in the same receiver FOV, pixels of the optical signal 1 and the optical signal 2 are totally the same. In this case, any pixel includes two dots, that is, includes two echo signals.

12E in FIG. 12 is a schematic diagram of point clouds obtained by the radar system through target detection by using the optical signal 1 and the optical signal 2 in receiver FOVs that have a same size but are staggered. As shown in 12E in FIG. 12, although pixels of the optical signal 1 do not totally coincide with pixels of the optical signal 2, a quantity of point clouds may also be significantly increased within a unit of a receiver FOV compared with that in each of 12A and 12B in FIG. 12.

12F in FIG. 12 is a schematic diagram of point clouds obtained by the radar system through target detection by using the optical signal 1, the optical signal 2, and the optical signal 3 in three different receiver FOVs. As shown in 12F in FIG. 12, when radar detection is performed by using the three optical signals with different wavelengths, the three optical signals may be transmitted and received at the same time or in a time-division manner. The optical signals with different wavelengths are transmitted by using respective backbone devices and performed wavelength division multiplexing, and enter corresponding detectors for receiving, without interfering with each other. This also greatly improves the quantity of point clouds and the resolution of the radar system.

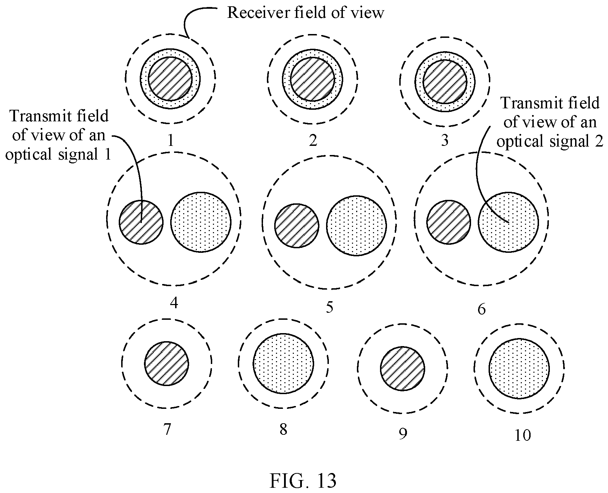

For example, refer to FIG. 13. FIG. 13 is a schematic diagram of a relationship between a transmit field of view and a receiver field of view corresponding to the multi-wavelength optical signal. For ease of understanding, in FIG. 13, only the optical signal 1 whose wavelength is λ1 and the optical signal 2 whose wavelength is λ2 are used as examples for specific description. It may be understood that FIG. 13 shows only several possible cases as examples, and an actual scenario may include but is not limited to the case shown in FIG. 13. Dots in FIG. 13 are used to illustrate transmit locations of the optical signal 1 and the optical signal 2. The transmit locations of the optical signal 1 and the optical signal 2 may be the same, or may be different. In FIG. 13, two dots of different sizes are used as an example for illustration.

FIG. 13 specifically shows a schematic diagram of 10 receiver fields of view. As shown in FIG. 13, each receiver field of view may include transmit fields of view of one or two optical signals. As shown in FIG. 13, in a receiver field of view 1 to a receiver field of view 3, a transmit field of view of the optical signal 1 and a transmit field of view of the optical signal 2 have different sizes, but locations of the two signals overlap; in a receiver field of view 4 to a receiver field of view 6, the transmit field of view of the optical signal 1 and the transmit field of view of the optical signal 2 have different sizes, the locations of the two signals do not intersect, and the transmit field of view of the optical signal 1 and the transmit field of view of the optical signal 2 are both located in the receiver field of view to which the two signals belong; and in a receiver field of view 7 and a receiver field of view 9, the transmit field of view of the optical signal 1 is included, in a receiver field of view 8 and a receiver field of view 10, the transmit field of view of the optical signal 2 is included, and therefore the transmit fields of view of the optical signal 1 and the optical signal 2 are totally independent.

It should be noted that FIG. 13 may be a schematic diagram of the 10 receiver fields of view that are receiver fields of view when the radar system sequentially moves in the two-dimensional scanning process. In this case, the receiver fields of view of the two-dimensional scanner are variable in the two-dimensional scanning process of the radar system. Alternatively, the radar system may perform two-dimensional scanning in a fixed mode, for example, perform two-dimensional scanning in a manner of the receiver field of view 1 to the receiver field of view 3; perform scanning in a manner of the receiver field of view 4 to the receiver field of view 6; or perform two-dimensional scanning by transmitting the optical signals with different wavelengths in a manner of the receiver field of view 7 to the receiver field of view 10.

As shown in FIG. 13, divergence angles of the lasers with wavelengths, FOVs of the detectors, TOF time, and the like may be the same or different. Laser emitted by each laser may independently correspond to a receiver FOV of a wavelength of the laser, or a multi-wavelength laser may correspond to a same FOV An emergent moment and an emergent azimuth of a laser of each wavelength may be aligned in time domain and space domain, or may separately use a respective start moment and a respective start location. An end moment of a maximum measurement distance and a location of a maximum receiving azimuth corresponding to a detector of each wavelength may be aligned in time domain and space domain, or may be set separately.

In the radar system in any one of the foregoing embodiments, the processor is configured to obtain the first point cloud data based on the electrical signals corresponding to the wavelengths. Specifically, this embodiment of this application may provide at least two implementations.

In a possible embodiment, the processor may directly generate the first point cloud data based on the electrical signals corresponding to the plurality of wavelengths. In this embodiment, after receiving the electrical signals from the detection module, the processor performs calculation based on transmit parameters respectively corresponding to these electrical signals, to determine point cloud locations corresponding to the electrical signals. Therefore, the first point cloud data can be obtained by summarizing the point cloud locations corresponding to the electrical signals.

This embodiment is simple and easy to implement. In addition, in this embodiment, the first point cloud data is obtained by performing target detection by using the optical signals with the plurality of wavelengths. As described above, compared with the conventional manner in which two-dimensional scanning is performed by using the single-wavelength optical signal, this embodiment can increase a quantity of point clouds in the first point cloud data by multiples. This not only breaks through the limitation of the TOF time on the quantity of point clouds, but also helps resolve an environment adaptability problem of the single-wavelength optical signal (this is specifically described later).

In addition to directly generating the first point cloud data, the processor may further calculate an environmental quality parameter, and compensate the generated point cloud data (in this case, the generated point cloud data may be denoted as second point cloud data) by using the environmental quality parameter, to obtain the first point cloud data (after compensation). In other words, the processor may be specifically configured to: generate the second point cloud data based on the electrical signals respectively corresponding to the plurality of wavelengths, and compensate the second point cloud data by using the environmental quality parameter, to obtain the first point cloud data.

The environmental quality parameter is used to indicate impact of a current environment on a radar detection result. The environmental quality parameter in this embodiment of this application may include but is not limited to one or more of a fog cluster type, a bad weather level, a particle concentration, humidity, or a particle size distribution.

In this embodiment of this application, the processor may be configured to obtain the environmental quality parameter.

In a possible embodiment, specifically, when the environmental quality parameter is stored at a preset location, the processor may directly obtain data stored at the preset location. In this way, the environment quality parameter can be obtained. In this embodiment, the environmental quality parameter may be obtained, through calculation, by another electronic device, for example, a controller of a movable platform carried in the radar system, and pre-stored in the preset location.

In another possible embodiment, the processor may be specifically configured to calculate and obtain the environmental quality parameter. In other words, the processor may calculate the environmental quality parameter based on the electrical signals respectively corresponding to the plurality of wavelengths.

In this embodiment, the processor may extract, from the electrical signals corresponding to the plurality of wavelengths, noise parameters corresponding to the wavelengths, and then determine the environmental quality parameter based on the noise parameters corresponding to the plurality of wavelengths. The noise parameter may include a backscattering noise parameter. In addition, the noise parameter may further include an atmospheric noise parameter, a noise parameter of another radar, a fog noise parameter, an ambient light noise (for example, solar light noise) parameter, or the like.

Impact of the atmosphere on the signal is divided into two parts: scattering and absorption. Both scattering and absorption can attenuate the signal and broaden a pulse. Signal attenuation weakens the target signal, and affects ranging performance and target signal strength (reflectivity) estimation. Pulse broadening causes moment measurement errors of the echo signals, and affects ranging precision. Scattering is dispersing laser into reflected light in different directions. Backscattering light enters the laser radar system and generates backscattering noises on the echo signals, and this affects a signal-to-noise ratio in target signal detection.

Therefore, scattering coefficients and absorption coefficients can be obtained through calculation through echo signal inversion, a noise signal is filtered or suppressed, and a waveform and an amplitude of the target signal are corrected. The scattering coefficients and the absorption coefficients may be used to determine the environmental quality parameter.

For example, in an embodiment, when obtaining the environmental quality parameter, the processor may process, by using a backscattering function, backscattering noise parameters corresponding to the plurality of wavelengths to obtain the scattering coefficients; process, by using an atmospheric absorption function, the electrical signals and the backscattering noise parameters corresponding to the plurality of wavelengths, to obtain the absorption coefficients; and determine the environmental quality parameter based on the scattering coefficients and the absorption coefficients.

For example, when the radar system performs target detection by using the multi-wavelength optical signal (including the optical signal 1 and the optical signal 2, and the wavelength of the optical signal 1 and the wavelength of the optical signal 2 are not equal), after the multi-wavelength optical signal is processed by the detector, the processor may receive an electrical signal 1 corresponding to the optical signal 1 and an electrical signal 2 corresponding to the optical signal 2.

In this scenario, the processor may perform matched filtering processing on the electrical signal 1 to extract a backscattering noise parameter 1 corresponding to the electrical signal 1, process the backscattering noise parameter 1 by using the backscattering function to obtain a scattering coefficient 1, and process the backscattering noise parameter 1 and the electrical signal 1 by using the atmospheric absorption function to obtain an absorption coefficient 1. In addition, the processor may perform matched filtering processing on the electrical signal 2 to extract a backscattering noise parameter 2 corresponding to the electrical signal 2, process the backscattering noise parameter 2 by using the backscattering function to obtain a scattering coefficient 2, and process the backscattering noise parameter 2 and the electrical signal 2 by using the atmospheric absorption function to obtain an absorption coefficient 2. Then, the processor may determine the environmental quality parameter based on the scattering coefficient 1, the absorption coefficient 1, the scattering coefficient 2, and the absorption coefficient 2.

It may be understood that different environmental quality parameters are determined in different manners. Specifically, when the environmental quality parameter is determined, only the scattering coefficients and the absorption coefficients that are obtained through calculation need to be substituted into a corresponding environmental parameter determining model, to obtain the environmental quality parameter output by the environmental parameter determining model. In other words, the environmental parameter determining model is used to determine the environmental quality parameter, input of the model may be scattering coefficients and absorption coefficients that are corresponding to the multi-wavelength optical signal, and output of the model is the environmental quality parameter. For example, a first model is used to determine a fog cluster type, and a second model is used to determine a bad weather degree. In this case, the processor may input the scattering coefficient 1, the absorption coefficient 1, the scattering coefficient 2, and the absorption coefficient 2 into the first model to obtain a fog cluster type output by the first model, and input the scattering coefficient 1, the absorption coefficient 1, the scattering coefficient 2, and the absorption coefficient 2 into the second model to obtain a bad weather degree output by the second model.

It should be noted that, in this embodiment of this application, there is no particular limitation on a model type of the environmental parameter determining model. For example, the environmental parameter determining model may be a formula model, a neural network model, another mathematical model, or the like.

As described above, the environmental quality parameter may be obtained through calculation by the processor in the radar system, or may be obtained through calculation by another processor. For example, the radar system may send the second point cloud data and/or the electrical signals corresponding to the plurality of wavelengths to a main controller, and the main controller may obtain the environmental quality parameter based on the second point cloud data and/or the electrical signals. Then, the main controller may send the environmental quality parameter to the radar system, or the main controller may store the environmental quality parameter at a preset location, and the radar system has permission to obtain data at the preset location.

In this embodiment of this application, the environmental quality parameter may be obtained through real-time calculation, or may be obtained through interval calculation. For example, in an actual radar detection scenario, after receiving the plurality of electrical signals with different wavelengths, the processor may directly generate the second point cloud data, calculate the environmental quality parameter in real time based on the received electrical signals, and then compensate the second point cloud data by using the environmental quality parameter to obtain the first point cloud data. Alternatively, for another example, the radar system may periodically calculate the environmental quality parameter. In this way, after generating the second point cloud data, the processor may directly obtain the environmental quality parameter obtained through calculation in a current period (or last time), and compensate the second point cloud data based on the environmental quality parameter to obtain the first point cloud data.

When the second point cloud data is specifically compensated by using the environmental quality parameter, processing may be performed in the following manner: The processor may obtain, from a preset compensation formula, a target compensation formula that matches the environmental quality parameter, and then compensate the second point cloud data by using the target compensation formula, to obtain the first point cloud data.

It should be noted that the preset compensation formula may be an empirical formula, or a formula obtained by using a preset calibration experiment. A source of the compensation formula is not particularly limited in this embodiment of this application.

In a possible embodiment, a correspondence between each environmental quality parameter and each preset compensation formula may be preset. In this case, when the target compensation formula is determined, only one compensation formula corresponding to the environmental quality parameter needs to be obtained. For example, a correspondence between a fog cluster type and a preset compensation formula may be preset in advance. In this way, the target compensation formula can be obtained provided that a fog cluster type is determined based on the foregoing steps and a compensation formula corresponding to the fog cluster type is obtained.

When the second point cloud data is compensated by using the target compensation formula, compensation manners vary based on different preset compensation formulas. The compensation formula is not particularly limited herein. In an example possible embodiment, a scanning parameter of the two-dimensional scanner, detection responsiveness of the detection module, an amplification coefficient, a transmit parameter corresponding to the first optical signal, and a receive parameter corresponding to the second optical signal may be processed by using the target compensation formula to obtain a compensation value, and then, the second point cloud data is compensated by using the compensation value to obtain the first point cloud data.

In addition to directly outputting the first point cloud data, the radar system provided in this embodiment of this application may further analyze the first point cloud data to determine the radar detection result, and further output the radar detection result. In other words, the radar system may be configured to output the first point cloud data and/or the radar detection result.

For example, in an embodiment, the processor may further obtain, based on the first point cloud data, a single-wavelength detection result corresponding to each wavelength, and then determine the radar detection result based on single-wavelength detection results corresponding to the plurality of wavelengths. Therefore, different from the conventional technology in which a single-wavelength detection result is directly used as a radar detection result, this application is used to obtain the radar detection result with reference to the single-wavelength detection results corresponding to the plurality of wavelengths. This can effectively resolve a problem that a single-wavelength optical signal is limited by an environment, and help improve precision of the radar detection result.

The radar detection result in this embodiment of this application may include but is not limited to a distance between the target (or referred to as the detection target) and the radar (namely, the radar system) and/or the target type.

For example, the processor may determine, by using a receive/transmit moment of an optical signal corresponding to each wavelength in the first point cloud data, a first distance corresponding to each wavelength as the single-wavelength detection result; and determine a second distance based on first distances corresponding to the plurality of wavelengths, where the second distance is used to represent the distance between the radar system and the detection target.

The processor may calculate the receive/transmit moment of the optical signal and a light speed by using a speed distance formula, to obtain the first distance corresponding to the light with each wavelength. It may be understood that the first distance is used to represent a distance that is between the radar system and the detection target and obtained through detection by the light with the wavelength. However, in this application, the second distance may be determined based on the plurality of first distances in a plurality of implementations.

For example, in a possible embodiment, the processor may obtain an average value of the plurality of first distances, and determine the average value as the second distance. In another possible embodiment, after filtering out the largest value and the smallest value from the plurality of first distances, the processor may obtain an average value of remaining first distances, and determine the average value as the second distance. In another possible embodiment, the processor may obtain the smallest value of the plurality of first distances, and determine the smallest value as the second distance. Details are not described herein.

The processor may further determine, by using echo intensity of an optical signal corresponding to each wavelength in the first point cloud data, a target reflectivity corresponding to each wavelength as the single-wavelength detection result; and then determine a type of the detection target based on the target reflectivities corresponding to the plurality of wavelengths.

For example, in a possible embodiment, the processor may obtain an average value of the plurality of target reflectivities, and determine a type corresponding to the average value as the type of the detection target. In another possible embodiment, after filtering out the largest value and the smallest value of the plurality of target reflectivities, the processor may obtain an average value of remaining target reflectivities, and determine a type corresponding to the average value as the type of the detection target. In another possible embodiment, the processor may filter out a type corresponding to the largest value or a type corresponding to the smallest value in the plurality of target reflectivities, and determine the type as the type of the detection target.

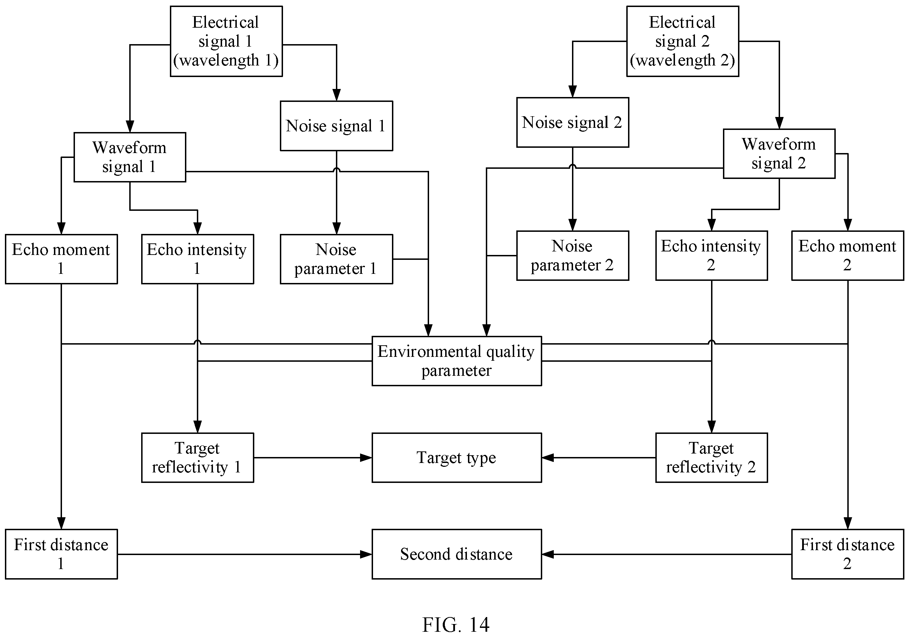

For example, FIG. 14 is a schematic diagram in which a processor obtains a radar detection result (a radar detection method). As shown in FIG. 14, after receiving the electrical signal 1 (with a wavelength 1) and the electrical signal 2 (with a wavelength 2), the processor separately performs matched filtering processing, divides the electrical signal 1 into a noise signal 1 and a waveform signal 1, and divides the electrical signal 2 into a noise signal 2 and a waveform signal 2. In addition, the wavelength 1 is not equal to the wavelength 2.

Then, in one aspect, the processor may determine a noise parameter 1 based on the noise signal 1, determine a noise parameter 2 based on the noise signal 2, and then determine the environmental quality parameter with reference to the noise parameter 1 and the noise parameter 2, the electrical signal 1, and the electrical signal 2.

In another aspect, the processor may obtain an echo moment 1 and echo intensity 1 of the waveform signal 1, and obtain an echo moment 2 and echo intensity 2 of the waveform signal 2.

On this basis, the processor may calculate, based on the environmental quality parameter and the echo moment 1, a first distance 1 corresponding to the electrical signal 1. In this step, the processor may calculate a ranging error 1 by using the environmental quality parameter, and compensate a distance 1' by using the ranging error 1 to obtain the first distance 1, where the distance 1' is obtained through calculation directly based on a transmit moment and the echo moment 1 of the optical signal corresponding to the electrical signal 1. In addition, the processor may further calculate, based on the environmental quality parameter and the echo moment 2, a first distance 2 corresponding to the wavelength 2. The processor may calculate a ranging error 2 by using the environmental quality parameter, and compensate a distance 2' by using the ranging error 2 to obtain the first distance 2, where the distance 2' is obtained through calculation directly based on a transmit moment and the echo moment 2 of the optical signal corresponding to the electrical signal 2. Then, the processor may determine the second distance between the radar system and the detection target based on the first distance 1 and the first distance 2.

In addition, the processor may further calculate, based on the environmental quality parameter and the echo intensity 1, a target reflectivity 1 corresponding to the electrical signal 1. During a specific implementation, the processor may calculate a compensation value 1 of the echo intensity 1 based on the environmental quality parameter, compensate the echo intensity 1 by using the compensation value 1, and further obtain the target reflectivity 1 through calculation by using an echo intensity 1' obtained after compensation. In addition, the processor may further calculate, based on the environmental quality parameter and the echo intensity 2, a target reflectivity 2 corresponding to the electrical signal 2. During a specific implementation, the processor may calculate a compensation value 2 of the echo intensity 2 based on the environmental quality parameter, compensate the echo intensity 2 by using the compensation value 2, and further obtain the target reflectivity 2 through calculation by using an echo intensity 2' obtained after compensation. Then, the processor may determine the type of the detection target based on the target reflectivity 1 and the target reflectivity 2.

In the implementation of determining the target type based on the target reflectivities corresponding to the plurality of different wavelengths, target recognition accuracy can be effectively improved. When the target distance and morphology information are similar, target recognition and classification are performed based on reflectivity information. A target reflectivity is related to an incident wave length, a target material, an angle, and the like. Reflectivities of different materials in a single band may be the same. A target recognition effect can be effectively enhanced by using differentiated reflectivity information of a same target at different wavelengths.

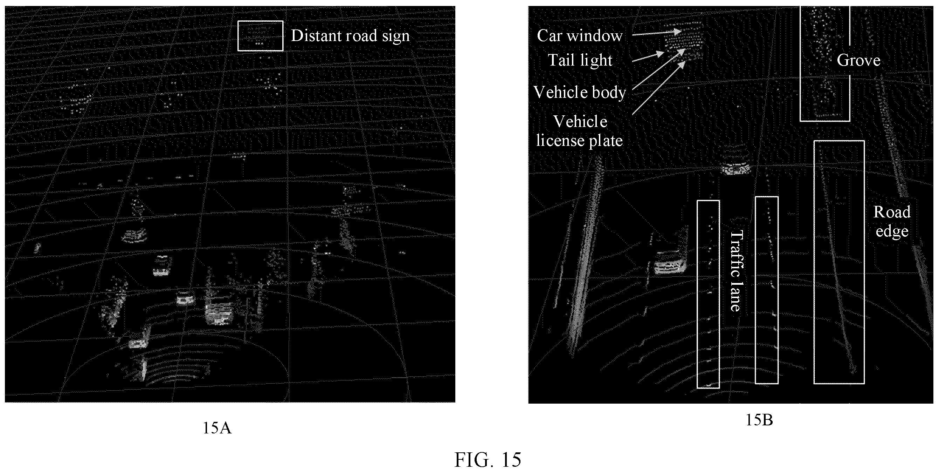

For example, FIG. 15 is a schematic diagram of target recognition effects generated when a same target is separately recognized by using a single-wavelength optical signal and a multi-wavelength optical signal. 15A in FIG. 15 is a schematic diagram of an effect of performing target detection by using the single-wavelength optical signal, and 15B in FIG. 15 is a schematic diagram of an effect of performing target detection by using the multi-wavelength optical signal. It is obvious that more point clouds are included in 15B in FIG. 15, and more valid information can be identified.

In any one of the foregoing embodiments, the processor in the radar system may be configured to: determine a detection parameter of the radar system, and detect the target based on the detection parameter. The detection parameter herein may include but is not limited to a transmit parameter of the multi-wavelength optical signal with the plurality of wavelengths and a configuration parameter of the radar system. For the transmit parameter, refer to the foregoing description. Details are not described herein again. The configuration parameter is used to configure each module in the radar system. For example, the configuration parameter may include but is not limited to a scanning frequency, a detection frequency, and the like.

For example, in an embodiment, the detection parameter of the radar system may be determined by a controller. That is, the controller may determine the detection parameter of the radar system, and send first information to the processor in the radar system, where the first information is used to indicate the transmit parameter and/or the configuration parameter of the radar system. In this way, when determining the detection parameter, the processor can receive the first information from the controller, and determine the detection parameter based on the received first information. For example, the processor may directly determine the transmit parameter and/or the configuration parameter carried in the first information as the detection parameter. Alternatively, the processor may perform user-defined adjustment by using a preset algorithm based on the transmit parameter and/or the configuration parameter carried in the first information, and determine a transmit parameter and/or a configuration parameter obtained after adjustment as the detection parameter.

Alternatively, the detection parameter of the radar system may be determined by the processor.

For example, in a possible embodiment, the detection parameter of the radar system has been configured in advance, and the processor may extract pre-configured data by the processor as the detection parameter.

For example, in another possible embodiment, the radar system may alternatively obtain an environmental parameter of a current environment, and determine the transmit parameter and/or the configuration parameter based on the environmental parameter. The environmental parameter may include but is not limited to one or more of a weather type of the current environment, current world coordinates, image data of the current environment, or the like. Therefore, the environmental parameter may come from another sensor or communications module that is in a communication connection to the radar system.

For example, the sensor may include but is not limited to one or more of a millimeter-wave radar, an image collection apparatus, a global positioning system (Global Positioning System, GPS) receiver, an inertial measurement unit, and a human-computer interaction interface.

For example, the radar system and a camera (an image collection apparatus) are carried in a vehicle, the radar system is in a communication connection to the camera, and the camera may send collected image data to the radar system. In this way, after the radar system receives the image data, specifically, after receiving the image data, the processor can determine the weather type of the current environment by using an image recognition technology, and further detect the target based on a detection parameter corresponding to the current weather type and a preset correspondence between the weather type and the detection parameter (the transmit parameter and/or the configuration parameter).

The communications module may be connected to another electronic device or a network. In this way, the communications module can obtain the current weather type. It should be noted that the communications module may be a communications module in the radar system, or may be a communications module in a movable device on which the radar system is carried. In this case, the communications module is directly or indirectly in a communication connection to the radar system (for example, by using a controller).

In conclusion, in the radar system provided in this embodiment of this application, target detection can be performed in a same time or in a time-division manner by using the multi-wavelength optical signal with different wavelengths, and a 3D point cloud diagram can be implemented in a scanning FOV range by using one or more 2D scanners. The technical solution can compensate for disadvantages in a plurality of performance aspects of a current vehicle-mounted laser radar product, particularly a laser radar system based on a 2D scanning architecture, and improve an overall measurement capability. The details are as follows.

Resolution: Use of the multi-wavelength can break through limitations of TOF time and scanning performance within a limited receiver FOV range, and increase a quantity of pixel units, thereby improving the resolution of the laser radar. Detection is performed densely based on a beam quality difference of the wavelengths by using wavelengths with a small divergence angle in an area where the resolution needs to be improved. In addition, a difference between human eye security corresponding to different wavelengths may be used to increase laser power, and transmit energy of a single beam is allocated to a plurality of detector pixel units, thereby further improving resolution of the system.

Quantity of point clouds: As described above, the quantity of laser radar point clouds is related to the quantity of transmit and receive channels, the TOF time, the laser re-frequency, and the like. Multi-wavelength is an effective method to break through the limitation of the TOF. In addition, lasers with different wavelengths have different performance such as re-frequency, pulse width, and power, and this can further improve light output efficiency per unit time and space.

Human eye security and dynamic range: Lasers with different wavelengths have different human eye security thresholds. A long-wave band with a high human eye security threshold may be used to output high-power laser for long-distance detection, and a short-wave band with a low human eye security threshold may be used to output a low-power laser for short-distance and medium-distance detection, to compensate for a saturation phenomenon and a dead zone limitation of a long wavelength with high power in short-distance measurement, and improve ranging precision within an overall dynamic range and full measurement range of the system.

Improving the target recognition effect: For a vehicle-mounted sensing system equipped with the laser radar, when the target distance and the morphology information are similar, target recognition and classification are mainly performed based on the reflectivity information. The target reflectivity is related to the incident wave length, the target material, the angle, and the like. Reflectivities of different materials in a single band may be the same. The target recognition effect can be effectively enhanced by using differentiated reflectivity information of the same target at different wavelengths.

Improving adaptability in different weathers: Different backscattering echo noises can be obtained based on differences of light scattering and light absorption characteristics of different wavelengths in different harsh weathers (such as sand and dust, rain, snow, and fog), to determine types and degrees of obscurants (fog clusters) used to compensate signal echo strength and ranging precision, and also used to filter out a noise echo peak.

Embodiments of this application further provide a movable device and a radar detection method thereof. Refer to FIG. 1 to FIG. 3, the movable device may include a body, and a radar system and a controller that are carried on the body. The controller is configured to control the movable device to move. The radar system may be the radar system shown in any embodiment provided in this application. Details are not described again. The radar system is coupled to the controller, so that the controller may be based on data (first point cloud data and/or a radar detection result) from the radar system.

The following briefly describes the controller.

In this embodiment of this application, the controller may be configured to control the radar system to work, so as to detect a target, and may be configured to receive the data output by the radar system.

In a possible embodiment, the radar system may output the first point cloud data and/or the radar detection result, and the controller may be configured to control movement of the movable device based on the first point cloud data.

In another possible embodiment, the radar system may directly output the first point cloud data. In this way, when the radar system does not output the radar detection result, the controller in the movable device can receive the first point cloud data from the radar system, and obtain the radar detection result based on the first point cloud data. That is, the controller may receive second information from the radar system, where the second information carries the first point cloud data, then, obtain, based on the first point cloud data, a single-wavelength detection result corresponding to each wavelength, and further determine the radar detection result based on the single-wavelength detection results corresponding to a plurality of wavelengths.

For example, the controller may determine, by using a transmit/receive moment of an optical signal corresponding to each wavelength in the first point cloud data, a first distance corresponding to each wavelength as the single-wavelength detection result, and then determine a second distance based on first distances corresponding to the plurality of wavelengths, where the second distance is used to represent a distance between the radar system and a detection target.

For example, the controller may determine, by using echo intensity of an optical signal corresponding to each wavelength in the first point cloud data, a target reflectivity corresponding to each wavelength as the single-wavelength detection result; and determine a type of the detection target based on target reflectivities corresponding to the plurality of wavelengths.

A specific implementation in which the controller obtains the radar detection result based on the first point cloud data is the same as a manner in which the processor in the radar system obtains the radar detection result based on the first point cloud data. For details, refer to the foregoing description. Details are not described herein again.

In addition, the controller can determine a detection parameter of the radar system when controlling the radar system to perform a target detection task, that is, determine a transmit parameter and/or a configuration parameter of the radar system. For a determining manner, refer to the foregoing description. Then, the controller may send a first message to the radar system, where the first message is used to indicate the transmit parameter and/or the configuration parameter of the radar system.

When determining the detection parameter, the controller may obtain an environmental parameter by using a sensor and/or a communications module carried in the movable device, and determine the transmit parameter of the laser signal of each wavelength and/or the configuration parameter based on the environmental parameter. The sensor carried in the movable device may include but is not limited to one or more of a millimeter-wave radar, an image collection apparatus, a global positioning system receiver, an inertial measurement unit, and a human-computer interaction interface. Details are not described herein again.

In other words, in this embodiment of this application, the movable device may undertake some calculation functions of the radar system, and obtain the radar detection result with high accuracy based on the first point cloud data obtained by using a multi-wavelength light signal.

It may be understood that some or all of the steps or operations in the foregoing embodiments are merely examples. Other operations or variations of various operations may be performed in this embodiment of this application. In addition, the steps may be performed in a sequence different from that presented in the foregoing embodiments, and not all the operations in the foregoing embodiments are necessarily performed.

It may be understood that, in the foregoing embodiments, operations or steps implemented by the processor may also be implemented by a component (for example, a chip or a circuit) that can be used in the processor, and operations or steps implemented by the controller may also be implemented by a component (for example, a chip or a circuit) that can be used in the controller.

An embodiment of this application further provides an electronic device. The electronic device may be configured to implement the method of the corresponding part on the processor side or the controller side described in the foregoing method embodiments. For details, refer to the descriptions in the foregoing embodiments.

The electronic device may include one or more processing units. The processing unit may also be referred to as a processor (it should be noted that the processor herein refers to a processing module or a processing unit in the processor of the foregoing radar system), and may implement a specific control function. The processing unit may be a general-purpose processing unit, a dedicated processing unit, or the like.

In an optional design, the processing unit may alternatively store an instruction, and the instruction may be run by the processing unit, so that the electronic device performs the method corresponding to the processor side or the controller side described in the foregoing method embodiments.

In still another possible design, the electronic device may include a circuit. The circuit may implement a sending function, a receiving function, or a communication function in the foregoing method embodiments.

Optionally, the electronic device may include one or more memories. The one or more memories each store an instruction or intermediate data, and the instruction may be run on the processing unit, so that the electronic device performs the method described in the foregoing embodiments. Optionally, the memory may further store other related data. Optionally, the processing unit may also store an instruction and/or data. The processing unit and the memory may be separately disposed, or may be integrated together.

Optionally, the electronic device may further include a transceiver. The transceiver may be referred to as a transceiver unit, a transceiver machine, a transceiver circuit, or the like, and is configured to implement a transceiver function of the electronic device.

If the electronic device is a processor in a radar system, the processing unit in the electronic device is configured to determine and output first point cloud data and/or a radar detection result when receiving electrical signals corresponding to a plurality of wavelengths; and the transceiver in the electronic device may be configured to receive first information from a controller. For another example, the transceiver may be configured to send second information and the like to the controller. The transceiver may further complete another corresponding communication function. The processing unit is configured to complete a corresponding determining or control operation, and optionally, may further store a corresponding instruction in the memory. For a specific processing manner of each component, refer to related descriptions in the foregoing embodiments.

If the electronic device is a controller in a movable device, the processing unit in the electronic device may be configured to: receive first point cloud data, and obtain a radar detection result based on the first point cloud data; and the transceiver in the electronic device may be configured to receive second information from a radar system. For another example, the transceiver may be configured to send first information and the like to the radar system. The transceiver may further complete another corresponding communication function. The processing unit is configured to complete a corresponding determining or control operation, and optionally, may further store a corresponding instruction in the memory. For a specific processing manner of each component, refer to related descriptions in the foregoing embodiments.

The processing unit and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processing unit and the transceiver may also be manufactured by using various 1C process technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the electronic device may be an independent device or may be a part of a large device. For example, the device may be: (1) an independent integrated circuit IC, a chip, a chip system, or a subsystem; (2) a set of one or more ICs, where optionally, the IC set may alternatively include a storage component configured to store data and/or an instruction; (3) an ASIC, such as a modem (MSM); (4) a module that can be embedded in another device; (5) a receiver, a terminal, a cellular phone, a wireless device, a handheld device, a mobile unit, or an electronic device; (6) others.

An embodiment of this application further provides a computer-readable storage medium. The computer-readable storage medium stores a computer program. When the computer program is run on a computer, the computer is enabled to perform the radar detection method implemented by the processor or controller in the foregoing embodiment.

In addition, an embodiment of this application further provides a computer program product. The computer program product includes a computer program. When the computer program product runs on a computer, the computer is enabled to perform the radar detection method implemented by the processor or controller in the foregoing embodiment.

All or some of the foregoing embodiments may be implemented by software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on the computer, all or some of the procedure or functions according to this application are generated. The computer may be a general-purpose computer, a dedicated computer, a computer network, or other programmable apparatuses. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk)), or the like.

**Claims**

1.  A radar system, comprising:

    a laser module, configured to generate a multi-wavelength optical signal;
    a two-dimensional scanner, configured to: perform two-dimensional scanning by using the multi-wavelength optical signal, and receive an echo signal located in a receiver field of view of the two-dimensional scanner, wherein the echo signal is a reflected signal formed after a scanned object is irradiated by the multi-wavelength optical signal, and a unit of a receiver field of view of the two-dimensional scanner comprises a plurality of echo signals;
    a wavelength division module, configured to perform optical splitting processing on the echo signal received by the two-dimensional scanner, to obtain a plurality of single-wavelength optical signals;
    a detection module, configured to separately convert the plurality of single-wavelength optical signals into electrical signals corresponding to wavelengths; and
    a processor, configured to obtain first point cloud data based on the electrical signals.

2.  The system according to claim 1, wherein the multi-wavelength optical signal comprises a first wavelength optical signal and a second wavelength optical signal, and a wavelength of the first wavelength optical signal is different from a wavelength of the second wavelength optical signal; and

    when a transmit parameter of the first wavelength optical signal is different from a transmit parameter of the second wavelength optical signal, a parameter of a minimum receiver field of view corresponding to the first wavelength optical signal is different from a parameter of a minimum receiver field of view corresponding to the second wavelength optical signal, wherein
    the transmit parameter comprises one or more of a divergence angle, an emergent location, an emergent moment, an emergent angle, a location of a receiver field of view, a size of a receiver field of view, or time of flight; and
    the parameter of the minimum receiver field of view comprises one or more of a location, a size, or a quantity of the minimum receiver field of view.

3.  The system according to claim 1 or 2, wherein the laser module comprises one or more lasers; and

    when the laser module comprises one laser, the laser is a tunable laser, and the multi-wavelength optical signal comprises a plurality of single-wavelength optical signals; or
    when the laser module comprises a plurality of lasers, the plurality of lasers comprise tunable lasers and/or single-wavelength lasers, wherein wavelengths of optical signals generated by any two of the single-wavelength lasers are different, and the multi-wavelength optical signal comprises one optical signal comprising a plurality of wavelengths, or a plurality of single-wavelength optical signals.

4.  The system according to any one of claims 1 to 3, wherein the wavelength division module is specifically configured to: perform optical splitting processing on the echo signal, to obtain the plurality of single-wavelength optical signals, wherein any two of the single-wavelength optical signals have different wavelengths.

5.  The system according to any one of claims 1 to 4, wherein the wavelength division module is further configured to: perform optical splitting processing or light converging processing on the multi-wavelength optical signal generated by the laser module, and provide the multi-wavelength optical signal to the two-dimensional scanner for two-dimensional scanning.

6.  The system according to any one of claims 1 to 5, wherein the wavelength division module comprises one or more of a beam splitter, an optical fiber, a lens, a prism, a reflector, or a diffraction component.

7.  The system according to any one of claims 1 to 6, wherein the detection module comprises one or more detectors; and

    when the detection module comprises one detector, the detector is a multi-wavelength detector, and the multi-wavelength detector is configured to receive and process the single-wavelength optical signals with a plurality of wavelengths; or
    when the detection module comprises a plurality of detectors, the plurality of detectors comprise multi-wavelength detectors and/or single-wavelength detectors, wherein any one of the single-wavelength detectors is configured to receive and process the single-wavelength optical signal with one wavelength.

8. The system according to any one of claims 1 to 7, wherein the radar system is an off-axis optical system or a coaxial optical system.

9. The system according to any one of claims 1 to 8, wherein the processor is specifically configured to:

   generate second point cloud data based on the electrical signals respectively corresponding to the plurality of wavelengths; and
   compensate the second point cloud data by using an environmental quality parameter, to obtain the first point cloud data.

10. The system according to claim 9, wherein the processor is further configured to:

    extract, from the electrical signals respectively corresponding to the plurality of wavelengths, noise parameters corresponding to the wavelengths; and
    determine the environmental quality parameter based on the noise parameters corresponding to the plurality of wavelengths.

11. The system according to claim 10, wherein the noise parameter comprises a backscattering noise parameter; and the processor is specifically configured to:

    process, by using a backscattering function, backscattering noise parameters corresponding to the plurality of wavelengths, to obtain scattering coefficients;
    process, by using an atmospheric absorption function, the electrical signals and the backscattering noise parameters corresponding to the plurality of wavelengths, to obtain absorption coefficients; and
    determine the environmental quality parameter based on the scattering coefficients and the absorption coefficients.

12. The system according to any one of claims 9 to 11, wherein the environmental quality parameter comprises one or more of a fog cluster type, a bad weather level, a particle concentration, humidity, or a particle size distribution.

13. The system according to claim 9, wherein the processor is specifically configured to:

    obtain, from a preset compensation formula, a target compensation formula that matches the environmental quality parameter; and
    compensate the second point cloud data by using the target compensation formula, to obtain the first point cloud data.

14. The system according to any one of claims 1 to 13, wherein the processor is further configured to:

    obtain, based on the first point cloud data, a single-wavelength detection result corresponding to each wavelength; and
    determine a radar detection result based on single-wavelength detection results corresponding to the plurality of wavelengths.

15. The system according to claim 14, wherein the processor is specifically configured to:

    determine, by using a receive/transmit moment of an optical signal corresponding to each wavelength in the first point cloud data, a first distance corresponding to each wavelength as the single-wavelength detection result; and
    determine a second distance based on first distances corresponding to the plurality of wavelengths, wherein the second distance is used to represent a distance between the radar system and a detection target.

16. The system according to claim 14 or 15, wherein the processor is specifically configured to:

    determine, by using echo intensity of an optical signal corresponding to each wavelength in the first point cloud data, a target reflectivity corresponding to each wavelength as the single-wavelength detection result; and

determine a type of the detection target based on target reflectivities corresponding to the plurality of wavelengths.

17. The system according to any one of claims 1 to 16, wherein the processor is further configured to:

determine a detection parameter of the radar system, wherein the detection parameter comprises a transmit parameter of the multi-wavelength optical signal with the plurality of wavelengths and a configuration parameter of the radar system; and
detect the target based on the detection parameter.

18. The system according to claim 17, wherein the processor is further configured to:
receive first information, wherein the first information is used to indicate the transmit parameter and/or the configuration parameter of the radar system.

19. A movable device, comprising:

the radar system according to any one of claims 1 to 18; and
a controller, coupled to the radar system and configured to control movement of the movable device based on first point cloud data.

20. A movable device, comprising:

the radar system according to any one of claims 1 to 13; and
a controller, coupled to the radar system, configured to obtain, based on first point cloud data, a single-wavelength detection result corresponding to each wavelength, and configured to determine a radar detection result based on single-wavelength detection results corresponding to a plurality of wavelengths.

21. The movable device according to claim 19 or 20, wherein the controller is specifically configured to:
send a first message to the radar system, wherein the first message is used to indicate a transmit parameter and/or a configuration parameter of the radar system.

22. The movable device according to claim 21, wherein the movable device further comprises a sensor and/or a communications module, and
the controller is further configured to:

obtain an environmental parameter by using the sensor and/or the communications module; and
determine the transmit parameter of the laser signal of each wavelength and/or the configuration parameter based on the environmental parameter.

23. The movable device according to claim 22, wherein the sensor comprises one or more of a millimeter-wave radar, an image collection apparatus, a global positioning system receiver, an inertial measurement unit, and a human-computer interaction interface.

24. The movable device according to any one of claims 19 to 23, wherein the controller is further configured to:

receive second information from the radar system, wherein the second information carries the first point cloud data;
obtain, based on the first point cloud data, a single-wavelength detection result corresponding to each wavelength; and
determine the radar detection result based on single-wavelength detection results corresponding to the plurality of wavelengths.

25. The movable device according to claim 24, wherein the controller is specifically configured to:

determine, by using a receive/transmit moment of an optical signal corresponding to each wavelength in the first point cloud data, a first distance corresponding to each wavelength as the single-wavelength detection result; and
determine a second distance based on first distances corresponding to the plurality of wavelengths, wherein the second distance is used to represent a distance between the radar system and a detection target.

26. The movable device according to claim 24 or 25, wherein the controller is specifically configured to:

   determine, by using echo intensity of an optical signal corresponding to each wavelength in the first point cloud data, a target reflectivity corresponding to each wavelength as the single-wavelength detection result; and

   determine a type of the detection target based on target reflectivities corresponding to the plurality of wavelengths.

27. The movable device according to any one of claims 19 to 26, wherein the movable device comprises a vehicle, an unmanned aerial vehicle, or a ground robot.

28. A radar detection method, comprising:

   generating a multi-wavelength optical signal;

   performing two-dimensional scanning by using the multi-wavelength optical signal, and receiving an echo signal located in a receiver field of view of a two-dimensional scanner, wherein the echo signal is a reflected signal formed after a scanned object is irradiated by the multi-wavelength optical signal, and a unit of a receiver field of view of the two-dimensional scanner comprises a plurality of echo signals;

   performing optical splitting processing on the echo signal, to obtain a plurality of single-wavelength optical signals;

   separately converting the plurality of single-wavelength optical signals into electrical signals corresponding to wavelengths; and

   obtaining first point cloud data based on the electrical signals.

29. A radar detection method, applied to a controller in a movable device, wherein the movable device further comprises a body and a radar system carried on the body, and the controller is coupled to the radar system; and the method comprises:

   receiving second information from the radar system, wherein the second information carries first point cloud data; and

   controlling movement of the movable device based on the first point cloud data.

30. A radar detection method, applied to a controller in a movable device, wherein the movable device further comprises a body and a radar system carried on the body, and the controller is coupled to the radar system; and the method comprises:

   receiving second information from the radar system, wherein the second information carries first point cloud data;

   obtaining, based on the first point cloud data, a single-wavelength detection result corresponding to each wavelength; and

   determining a radar detection result based on single-wavelength detection results corresponding to a plurality of wavelengths.

FIG. 1

FIG. 2

FIG. 3

FIG. 4

Infrared light

Visible light

| 390 nm | 750 nm | 1000 nm | 2500 nm | 3 μm | 5 μm | 8 μm | 12 μm |

51 52 53 54

FIG. 5

λ1, λ2, ..., λN

610

650

Detector 1    λ1    630    620

Detector 2    λ2

Detector N    λN

640

600

FIG. 6

FIG. 7

FIG. 8

FIG. 9

FIG. 10

FIG. 11

FIG. 12

FIG. 13

EP 4 166 988 A1

FIG. 14

FIG. 15

## INTERNATIONAL SEARCH REPORT

| International application No. |
|---|
| **PCT/CN2020/097435** |

| A. | CLASSIFICATION OF SUBJECT MATTER |
|---|---|

G01S 17/89(2020.01)i

According to International Patent Classification (IPC) or to both national classification and IPC

| B. | FIELDS SEARCHED |
|---|---|

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNPAT; CNKI; WPI; EPODOC: 华为技术有限公司, 激光, 雷达, lidar, 可移动设备, 无人机, UAV, 车辆, 汽车, 点云, 多 4w 波长, 波长, 双波长, 可调谐, 波分, 分光, WDM, 探测, laser, radar, mobile w device, unmanned w aerial w vehicle, vehicle, automobile, point cloud, multi+ 4w wavelength? , wavelength, double w wavelength, tunable, wavelength w division, spectroscopy, detect+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104251995 A (HANGZHOU ZHONGKE TIANWEI TECHNOLOGY CO., LTD.) 31 December 2014 (2014-12-31)<br>description, paragraphs [0001], [0032]-[0044], figures 1, 3 | 1-18, 28 |
| X | CN 109557554 A (BEIJING BEIJING AWAKENING TECHNOLOGY CO., LTD. TECHNOLOGY CO., LTD.) 02 April 2019 (2019-04-02)<br>description, paragraphs [0021], [0062] | 29 |
| X | CN 108872968 A (GUANGZHOU IMI-BES TECHNOLOGY CO., LTD.) 23 November 2018 (2018-11-23)<br>description, paragraphs [0076]-[0093] | 1-18, 28 |
| Y | CN 109557554 A (BEIJING BEIJING AWAKENING TECHNOLOGY CO., LTD. TECHNOLOGY CO., LTD.) 02 April 2019 (2019-04-02)<br>description, paragraphs [0021], [0062] | 19-27, 30 |
| Y | CN 104251995 A (HANGZHOU ZHONGKE TIANWEI TECHNOLOGY CO., LTD.) 31 December 2014 (2014-12-31)<br>description, paragraphs [0001], [0032]-[0044], figures 1, 3 | 19-27, 30 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 February 2021** | **23 March 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/097435** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 109073757 A (OPSYS TECH. LTD.) 21 December 2018 (2018-12-21)<br>        entire document | 1-30 |
| A | CN 108303701 A (HESAI PHOTONICS TECHNOLOGY CO., LTD.) 20 July 2018<br>(2018-07-20)<br>        entire document | 1-30 |
| A | US 2019257927 A1 (YAO, Xiaotian Steve) 22 August 2019 (2019-08-22)<br>        entire document | 1-30 |

Form PCT/ISA/210 (second sheet) (January 2015)

**INTERNATIONAL SEARCH REPORT**
Information on patent family members

International application No.

**PCT/CN2020/097435**

| Patent document cited in search report | | | Publication date (day/month/year) | Patent family member(s) | | | Publication date (day/month/year) |
|---|---|---|---|---|---|---|---|
| CN | 104251995 | A | 31 December 2014 | None | | | |
| CN | 109557554 | A | 02 April 2019 | CN | 209842062 | U | 24 December 2019 |
| CN | 108872968 | A | 23 November 2018 | None | | | |
| CN | 109073757 | A | 21 December 2018 | US | 10761195 | B2 | 01 September 2020 |
| | | | | US | 2020200874 | A1 | 25 June 2020 |
| | | | | WO | 2017184336 | A2 | 26 October 2017 |
| | | | | EP | 3446153 | A2 | 27 February 2019 |
| | | | | KR | 20180128447 | A | 03 December 2018 |
| | | | | JP | 2019516101 | A | 13 June 2019 |
| | | | | US | 2017307736 | A1 | 26 October 2017 |
| CN | 108303701 | A | 20 July 2018 | None | | | |
| US | 2019257927 | A1 | 22 August 2019 | WO | 2019161388 | A1 | 22 August 2019 |

Form PCT/ISA/210 (patent family annex) (January 2015)